# EUROPÄISCHE PATENTSCHRIFT

(11) **EP 3 694 945 B1**
(45) Veröffentlichungstag und Bekanntmachung des Hinweises auf die Patenterteilung: **21.05.2025**
(21) Anmeldenummer: 18783444.5
(22) Anmeldetag: 05.10.2018
(51) Int. Cl.: C09J 11/02, C08K 7/18, C08K 3/36, C09J 7/10

(54) **GEFÜLLTE HAFTKLEBMASSE**
FILLED ADHESIVE COMPOUND
MASSE ADHÉSIVE CHARGÉE

(30) Priorität: 12.10.2017 DE 102017218264
(43) Veröffentlichungstag der Anmeldung: 19.08.2020
(73) Patentinhaber: TESA SE, 22848 Norderstedt (DE)
(72) Erfinder: SCHUBERT, Thomas, 22850 Norderstedt (DE); MAYER, Michael, 20259 Hamburg (DE); RADEMACHER, Franciska, 22523 Hamburg (DE)
(74) Vertreter: tesa SE
(86) Internationale Anmeldenummer: PCT/EP2018/077109
(87) Internationale Veröffentlichungsnummer: WO 2019/072707

(56) Entgegenhaltungen:
- EP-A1- 0 384 598
- EP-A1- 1 995 282
- WO-A2-2006/120136
- DE-A1- 102015 208 792

## Beschreibung

Die Erfindung betrifft das technische Gebiet der Haftklebemassen, wie sie in Klebebändern zum temporären oder permanenten Verbinden von Substraten, beispielsweise von Bauteilen, verwendet werden. Insbesondere werden Haftklebemassen vorgeschlagen, die einen spezifisch dimensionierten Füllstoff enthalten und auf diese Weise gute Klebeigenschaften mit hoher Festigkeit und/oder Zähigkeit verbinden.

Unter einer Haftklebemasse bzw. einem Haftklebstoff wird erfindungsgemäß, wie im allgemeinen Sprachgebrauch üblich, ein Stoff verstanden, der zumindest bei Raumtemperatur dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. Im allgemeinen, grundsätzlich jedoch abhängig von der genauen Art des Haftklebstoffs, der Temperatur und der Luftfeuchtigkeit sowie des Substrats, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines höheren Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G') und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Eine Masse gilt im Allgemeinen als Haftklebemasse und wird im Sinne der Erfindung als solche definiert, wenn bei 23°C im Deformationsfrequenzbereich von 10⁰ bis 10¹ rad/sec sowohl G' als auch G" zumindest zum Teil im Bereich von 10³ bis 10⁷ Pa liegen. "Zum Teil" heißt, dass zumindest ein Abschnitt der G'-Kurve innerhalb des Fensters liegt, das durch den Deformationsfrequenzbereich von einschließlich 10⁰ bis einschließlich 10¹ rad/sec (Abszisse) sowie den Bereich der G'-Werte von einschließlich 10³ bis einschließlich 10⁷ Pa (Ordinate) aufgespannt wird, und wenn zumindest ein Abschnitt der G"-Kurve ebenfalls innerhalb des entsprechenden Fensters liegt.

Grundsätzlich ist der Einsatz von Füllstoffen in Polymerzusammensetzungen und Klebstoffen bekannt, beispielsweise mit dem Ziel, den Preis, die Optik oder bestimmte Eigenschaften zu modifizieren. Beispielsweise ist Kreide ein populärer Füllstoff für Rezepturen auf Basis von Naturkautschuk; Glashohlkugeln oder polymere Hohlkugeln werden häufig zur Herstellung von Acrylatschäumen verwendet. Es ist eine große Bandbreite an Dimensionen und Formen der Füllstoffe bekannt, die von nano- bis zu makroskaligen und von hohlen über poröse, runde, plättchenförmige und schichtförmige bis zu verästelten Füllstoffen reicht.

Bekannt ist beispielsweise die Verwendung von makroskaligen Hohlkugeln, wie sie in WO 2007 058812 A1 oder EP 1 995 282 A1 beschrieben ist.

Nanoskalige Füllstoffe sind häufig gefällte oder pyrogene Kieselsäuren oder auch Ruße. Die Dispergierung dieser Substanzen gestaltet sich schwierig, ihre verstärkende Wirkung hängt häufig vom Dispergiererfolg im Herstellungsprozess ab. Pyrogene Kieselsäure wird insbesondere zum Modifizieren der Beschichtungsviskosität eingesetzt. Ihre Wirkung wird meistens in Zusammenhang mit ihrer dreidimensionalen Struktur gebracht, wodurch sie verdickend und thixotropisch wirkt. Pyrogene Kieselsäuren sind vor allem dadurch gekennzeichnet, dass die Primärpartikel meist 5 - 50 nm groß und nicht vereinzelbar sind, sondern in Aggregaten untrennbar gebunden sind. Diese bilden dann Agglomerate, welche Durchmesser bis in den Mikrometer-Maßstab haben können.

Bekannt ist auch die Verwendung von Silica in Polyacrylaten, welche mit Mikroballons geschäumt sind, z.B. aus WO 2010 147888 A2.

US 7,531,595 lehrt die Verwendung nadelförmiger Silica-Nanofüllstoffe mit einem durchschnittlichen Durchmesser von 9 bis 25 nm und einer Länge von 40 bis 300 nm.

Aus EP 2 268 757 A1 sind nanoskalige core-shell-Partikel bekannt, welche verwendet werden, um die Eigenschaften von Polymeren zu beeinflussen. Nachteilig hierbei sind aufwändige Herstellprozesse. Es wäre wünschenswert keine Core-Shell-Architektur einsetzen zu müssen, weil derartige Partikel nur mit hohem Aufwand und in komplexen Verfahren hergestellt werden können.

Die Verwendung bestimmter anorganischer Füllstoffe in Haftklebmassen ist in DE 10 2015 208 792 A1 offenbart. WO 2011 133 518 A1 beschreibt den Einsatz oberflächenmodifizierter Siliziumdioxide mit einer Partikelgröße kleiner 100 nm in Haftklebmassen.

WO 2006/120136 A2 offenbart eine Haftklebemasse auf Basis eines Poly(meth)acrylats mit funktionalisierten singulären kugelförmigen Partikeln aus Silica, die einen Durchmesser von kleiner als 500 nm aufweisen und nicht aus konzentrischen Schichten aufgebaut sind.

EP 0 384 598 A1 offenbart ein Klebeband mit zwei Klebemassenschichten. Eine Klebemassenschicht ist thermisch aktivierbar, die andere Klebemassenschicht ist eine Haftklebemasse. Die Haftklebemasse basiert auf einem Poly(meth)acrylat und enthält Mikospheres aus Glas oder Polymer, die einen Durchmesser von 10-200 µm aufweisen und in einer Menge von 5-65 Vol.-% vorhanden sind.

Für viele Anwendungen ist eine hohe Festigkeit von Haftklebmassen gewünscht. Der Begriff "Festigkeit" bezieht sich dabei auf die Bruchfestigkeit der Klebmasse selbst, nicht auf die an der Grenzfläche zum zu verklebenden Substrat auftretende Adhäsion. Häufig sollen Haftklebmassen neben einer hohen Festigkeit auch eine hohe Dehnbarkeit aufweisen, denn hohe Dehnbarkeit bei hoher Festigkeit ergibt eine hohe Zähigkeit. Die Zähigkeit lässt sich als das Energieaufnahmevermögen der Masse verstehen.

Ein Weg um die Festigkeit von Klebmassen zu erhöhen ist der Einsatz von Füllstoffen. Diese verschlechtern aber regelmäßig die Dehnbarkeit und häufig auch die Adhäsion. Eine befriedigende Festigkeit und Dehnbarkeit von Klebmassen ist daher in der Regel nicht zu erreichen.

Die Auswirkungen einer zu niedrigen Festigkeit oder Dehnbarkeit von Klebstoffen zeigen sich beispielsweise bei zyklischer Belastung der Verklebungen, die z.B. durch Tag-Nacht-Wechsel, Fügeteile mit deutlich unterschiedlichen Ausdehnungskoeffizienten oder wiederholte Stöße oder Kompressionen wie bei zuschlagenden Türen hervorgerufen werden können. Typischerweise ist bei zyklischer Belastung ein kohäsives Versagen der Verklebung zu beobachten. Dies ist unter Umständen tückisch, weil die Beschädigung der Verklebung verborgen sein und erst bei zerstörenden Prüfungen sichtbar werden kann. Festigkeit und Dehnbarkeit nehmen in der Regel mit steigender Anzahl der Zyklen ab und unterschreiten dann schnell kritische Grenzwerte.

Es besteht ein anhaltender Bedarf an Haftklebmassen, die Bewegungen von Fügeteilen ausgleichen und zyklischen Belastungen standhalten können. Aufgabe der Erfindung ist es somit, Haftklebmassen mit verbesserter Zähigkeit und hoher Bewegungstoleranz zur Verfügung zu stellen. Der Lösung der Aufgabe liegt der Gedanke zugrunde, speziell geformte und dimensionierte Füllstoffe in Haftklebmassen einzusetzen. Ein erster und allgemeiner Gegenstand der Erfindung ist eine Haftklebmasse enthaltend mindestens ein Polymer, zumindest teilweise expandierte Mikroballons und 5 bis 50 Gew.-%, bezogen auf das Gesamtgewicht der Haftklebmasse, mindestens einen in seine Primärpartikel vereinzelbaren Füllstoff, wobei dieser Füllstoff Primärpartikel mit einem Aspektverhältnis der Längen von kürzester Achse Lₘᵢₙ zu längster Achse Lₘₐₓ von größer als 0,5 und mit einem mittleren Durchmesser d(0,5), bestimmt mittels Laserbeugung als Maximum der Verteilungskurve von anteiligem Volumen zu Partikelgröße an einer Suspension der Partikel in deionisiertem Wasser, mit einem mittleren Durchmesser d(0,5) von 50 nm bis 1000 nm enthält und diese Partikel nicht aus konzentrischen Schichten aufgebaut sind. Wie sich gezeigt hat, wird mit derartigen Füllstoffen ein verstärkender Effekt in Haftklebmassen erzielt, der sich vorteilhaft auf Dehnbarkeit, Steifigkeit und Festigkeit auswirkt und somit zu einer Verbesserung der Zähigkeit führt, ohne die Adhäsion zu negativ zu beeinflussen.

Insbesondere ist Gegenstand der Erfindung eine Haftklebmasse, die mindestens ein Polymer, zumindest teilweise expandierte Mikroballons und 5 bis 50 Gew.-% einen in seine Primärpartikel vereinzelbaren Füllstoff enthält, wobei dieser Füllstoff aus sphärischen Primärpartikeln mit einem mittleren Durchmesser d(0,5) von 50 nm bis 1000 nm besteht und diese Partikel nicht aus konzentrischen Schichten aufgebaut sind.

Das mindestens eine Polymer der erfindungsgemäßen Haftklebmasse ist bevorzugt ausgewählt aus der Gruppe bestehend aus Poly(meth)acrylaten, Synthesekautschuken, Naturkautschuk, Polyurethanen und Polyolefinen. Die erfindungsgemäße Haftklebmasse kann auch einen Blend aus zwei oder mehreren der vorgenannten Polymere umfassen. Besonders bevorzugt ist das mindestens eine Polymer ausgewählt aus der Gruppe bestehend aus Poly(meth)acrylaten und Synthesekautschuken. Insbesondere ist das mindestens eine Polymer der erfindungsgemäßen Haftklebmasse ein Poly(meth)acrylat.

Unter einem "Poly(meth)acrylat" wird ein Polymer verstanden, dessen Monomerbasis zu mindestens 40 Gew.-% aus Acrylsäure, Methacrylsäure, Acrylsäureestern und/oder Methacrylsäureestern besteht, wobei Acrylsäureester und/oder Methacrylsäureester zu mindestens 30 Gew.-% enthalten sind, jeweils bezogen auf die gesamte Monomerenzusammensetzung des betreffenden Polymers. Poly(meth)acrylate sind allgemein durch radikalische Polymerisation von Acryl- und/oder Methylacrylmonomeren sowie gegebenenfalls weiteren copolymerisierbaren Monomeren zugänglich. Der Begriff "Poly(meth)acrylat" umfasst erfindungsgemäß sowohl Polymere auf Basis von Acrylsäure und deren Derivaten als auch solche auf Basis von Acrylsäure und Methacrylsäure und deren Derivaten als auch solche auf Basis von Methacrylsäure und deren Derivaten.

Bevorzugt kann das Poly(meth)acrylat auf die folgende Monomerzusammensetzung zurückgeführt werden:
a) Acrylsäureester und/oder Methacrylsäureester der Formel (I)

   CH₂ = C(R')(COOR") (I),

   worin R^{I} = H oder CH₃ und R^{II} ein Alkylrest mit 4 bis 18 C-Atomen, besonders bevorzugt mit 4 bis 10 C-Atomen, ist;
b) olefinisch ungesättigte Monomere mit funktionellen Gruppen, die eine Reaktivität mit Vernetzersubstanzen aufweisen;
c) optional weitere olefinisch ungesättigte Monomere, die mit den Monomeren (a) und (b) copolymerisierbar sind.

Die Anteile der Monomere a), b), und c) sind besonders bevorzugt derart gewählt, dass das Poly(meth)acrylat eine Glasübergangstemperatur von ≤ 15 °C (DMA bei geringen Frequenzen) aufweist. Dazu ist es vorteilhaft, die Monomere a) mit einem Anteil von 45 bis 99 Gew.-%, die Monomere b) mit einem Anteil von 1 bis 15 Gew.-% und die Monomere c) mit einem Anteil von 0 bis 40 Gew.-% zu wählen, jeweils bezogen auf die gesamte Monomerenzusammensetzung des Poly(meth)acrylats.

Die Monomere a) sind besonders bevorzugt weichmachende und/oder unpolare Monomere. Vorzugsweise sind die Monomere a) daher ausgewählt aus der Gruppe bestehend aus n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, 2-Ethylhexylacrylat, 2-Ethylhexylmethacrylat, 2-Propylheptylacrylat und 2-Propylheptylmethacrylat. Besonders bevorzugt sind die Monomere a) ausgewählt aus der Gruppe bestehend aus n-Butylacrylat, 2-Ethylhexylacrylat, Methylacrylat und Isooctylacrylat.

Die Monomere b) sind besonders bevorzugt olefinisch ungesättigte Monomere mit funktionellen Gruppen, die eine Reaktion mit Epoxidgruppen eingehen können. Besonders bevorzugt enthalten die Monomere b) jeweils mindestens eine funktionelle Gruppe ausgewählt aus der Gruppe bestehend aus Hydroxy-, Carboxy-, Sulfonsäure- und Phosphonsäuregruppen, Säureanhydridfunktionen, Epoxidgruppen und substituierten oder unsubstituierten Aminogruppen.

Insbesondere sind die Monomere b) ausgewählt aus der Gruppe bestehend aus Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, 2-Hydroxyethylacrylat, 3-Hydroxypropylacrylat, 2-Hydroxyethylmethacrylat, 3-Hydroxypropylmethacrylat, 6-Hydroxyhexylmethacrylat, Allylalkohol, Glycidylacrylat und Glycidylmethacrylat.

Als Monomere c) kommen prinzipiell alle vinylisch funktionalisierten Verbindungen in Frage, die mit den Monomeren a) und den Monomeren b) copolymerisierbar sind. Mit Auswahl und Menge der Monomere c) lassen sich vorteilhaft Eigenschaften der erfindungsgemäßen Haftklebemasse regulieren.

Die Monomere c) sind besonders bevorzugt ausgewählt aus der Gruppe bestehend aus Methylacrylat, Ethylacrylat, n-Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, 2-Butoxyethylmethacrylat, 2-Butoxyethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofurfurylacrylat, Diethylaminoethylacrylat, Diethylaminoethylmethacrylat, Dimethylaminoethylacrylat, Dimethylaminoethylmethacrylat, , 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy-Polyethylenglykolmethacrylat 350, Methoxy-Polyethylenglykolmethacrylat 500, Propylenglycolmonomethacrylat, Butoxydiethylenglykolmethacrylat, Ethoxytriethylenglykolmethacrylat, Octafluoropentyl-acrylat, Octafluoropentylmethacrylat, 2,2,2-Trifluoroethylmethacrylat, 1,1,1,3,3,3-Hexa-fluoroisopropylacrylat, 1,1,1,3,3,3-Hexafluoroisopropylmethacrylat, 2,2,3,3,3-Pentafluoro-propylmethacrylat, 2,2,3,4,4,4-Hexafluorobutylmethacrylat, 2,2,3,3,4,4,4-Heptafluoro-butylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methyl-undecyl)acrylamid, N-(n-Butoxymethyl)acrylamid, N-(Butoxymethyl)methacrylamid, N-(Ethoxymethyl)acrylamid, N-(n-Octadecyl)acrylamid, N,N-Dimethylacrylamid, N,N-Dimethylmethacrylamid, N-Benzylacrylamid, N-Isopropylacrylamid, N-tert-Butylacrylamid, N-tert-Octylacrylamid, N-Methylolacrylamid, N-Methylolmethacrylamid; Acrylnitril, Methacrylnitril; Vinylmethylether, Ethylvinylether, Vinylisobutylether; Vinylacetat; Vinylhalogeniden, Vinylidenhalogeniden, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol, 2-Polystyrolethylmethacrylat mit einem Molekulargewicht M_{w} von 4000 bis 13000 g/mol und Poly(Methylmethacrylat)ethylmethacrylat M_{w} von 2000 bis 8000 g/mol.

Die Monomere c) können vorteilhaft auch derart gewählt werden, dass sie funktionelle Gruppen enthalten, die eine strahlenchemische Vernetzung (beispielsweise durch Elektronenstrahlen oder UV) unterstützen. Geeignete copolymerisierbare Photoinitiatoren sind z.B. Benzoinacrylat und acrylatfunktionalisierte Benzophenonderivate. Monomere, die eine Vernetzung durch Elektronenbestrahlung unterstützen, sind z.B. Tetrahydrofurfurylacrylat, N-tert-Butylacrylamid und Allylacrylat.

Besonders bevorzugt ist das Poly(meth)acrylat auf eine Monomerenzusammensetzung zurückzuführen, die aus
a) mindestens einem Monomer ausgewählt aus n-Butylacrylat, 2-Ethylhexylacrylat, Methylacrylat und Isooctylacrylat und
b) Acrylsäure
besteht. Insbesondere sind, sofern die erfindungsgemäße Haftklebmasse mehrere Poly(meth)acrylate enthält, alle Poly(meth)acrylate der erfindungsgemäßen Haftklebmasse auf die vorstehend beschriebene Monomerenzusammensetzung zurückzuführen.

Beispielsweise weist ein solches Polyacrylat einen Acrylsäuregehalt von kleiner als 6 Gew.-%, besonders bevorzugt von 2 bis 5 Gew.-% auf. Derartige Polymere weisen insbesondere eine statische Glasübergangstemperatur Tg von kleiner als -30 °C auf. In einer anderen Ausführungsform beträgt der Acrylsäuregehalt 3 bis 10 Gew.-%, insbesondere 5 bis 8 Gew.-%. Derartige Polymere weisen insbesondere eine statische Glasübergangstemperatur Tg von kleiner als -20 °C auf.

In einer weiteren Ausführungsform beträgt der Acrylsäuregehalt mehr als 7 Gew.-% und weniger als 15 Gew.-%, stärker bevorzugt zwischen 9 und 13 Gew.-%, und das Polyacrylat enthält als ein weiteres Monomer 2-Ethylhexylacrylat und/oder Isooctylacrylat. Derartige Polymere weisen insbesondere eine statische Glasübergangstemperatur Tg von kleiner als -40 °C auf. In einer weiteren Ausführungsform beträgt der Acrylsäuregehalt mehr als 10 Gew.-% und weniger als 25 Gew.-%, stärker bevorzugt zwischen 14 und 20 Gew.-%, und das Polyacrylat enthält als ein weiteres Monomer 2-Ethylhexylacrylat und/oder Isooctylacrylat. Derartige Polymere weisen insbesondere eine statische Glasübergangstemperatur Tg von kleiner als -20 °C auf.

Die Poly(meth)acrylate können durch radikalische Polymerisation der Monomere in Lösungsmitteln, insbesondere in Lösungsmitteln mit einem Siedebereich von 50 bis 150 °C, vorzugsweise von 60 bis 120 °C, unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegen, hergestellt werden.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat, Benzpinacol. In einer sehr bevorzugten Vorgehensweise wird als radikalischer Initiator 2,2'-Azobis(2-methylbutyronitril) oder 2,2'-Azobis(2-methylpropionitril) (2,2'-Azobisisobutyronitril; AIBN) verwendet.

Als Lösungsmittel für die Herstellung der Poly(meth)acrylate kommen Alkohole wie Methanol, Ethanol, n-und iso-Propanol, n-und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, bevorzugt sind.

Bevorzugt erfolgt nach der Herstellung (Polymerisation) der Poly(meth)acrylate eine Aufkonzentration, und die weitere Verarbeitung der Poly(meth)acrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Substanzklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte M_{w} der Poly(meth)acrylate liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 150.000 bis 1.000.000 g/mol. Die Angaben des mittleren Molekulargewichtes M_{w} und der Polydisperistät PD in dieser Schrift beziehen sich auf die Bestimmung per Gelpermeationschromatographie. Es kann vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Das Poly(meth)acrylat hat vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität des Polymerisats.

Ebenfalls geeignet sind Poly(meth)acrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Poly(meth)acrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letztere besonders gut geeignet sind. Auch über N-Oxyle lassen sich entsprechende Poly(meth)acrylate herstellen. Daneben lässt sich die Atom Transfer Radical Polymerization (ATRP) in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion der Halogenide Cu-, Ni-, Fe-, Pd-, Pt-, Ru-, Os-, Rh-, Co-, Ir-, Ag- oder Au-Komplexe eingesetzt werden.

Auch die Reversible Addition Fragmentation Chain Transfer Polymerization (RAFT-Polymerisation) ist geeignet.

Das bzw. die Poly(meth)acrylat(e) ist/sind bevorzugt vernetzt. Die Poly(meth)acrylate sind besonders bevorzugt thermisch vernetzt, insbesondere durch Verknüpfungsreaktionen - beispielsweise im Sinne von Additions- oder Substitutionsreaktionen - von in ihnen enthaltenen funktionellen Gruppen mit thermischen Vernetzern. Es können alle thermischen Vernetzer verwendet werden, die
- sowohl eine ausreichend lange Verarbeitungszeit gewährleisten, sodass es nicht zu einer Vergelung während des Verarbeitungsprozesses, insbesondere eines Extrusionsprozesses, kommt,
- als auch zu einer schnellen Nachvernetzung des Polymers auf den gewünschten Vernetzungsgrad bei niedrigeren Temperaturen als der Verarbeitungstemperatur, insbesondere bei Raumtemperatur, führen.

Bevorzugt sind die Poly(meth)acrylate mit Isocyanaten, insbesondere mit trimerisierten Isocyanaten, blockierten und/oder blockierungsmittelfreien und sterisch gehinderten Isocyanaten, und/oder Epoxidverbindungen vernetzt, jeweils bei Anwesenheit funktioneller Gruppen in den Polymer-Makromolekülen, die mit Isocyanatgruppen bzw. Epoxidgruppen reagieren können. Auch eine Vernetzung über Komplexbildner, auch als Chelate bezeichnet, ist möglich. Ein bevorzugter Komplexbildner ist beispielsweise Aluminiumacetylacetonat.

Um die Reaktivität der Isocyanate abzuschwächen, können vorteilhaft mit thermisch abspaltbaren funktionellen Gruppen blockierte Isocyanate eingesetzt werden. Zur Blockierung werden bevorzugt aliphatische primäre und sekundäre Alkohole, Phenolderivate, aliphatische primäre und sekundäre Amine, Lactame, Lactone und Malonsäureester verwendet.

Bevorzugt sind die Poly(meth)acrylate mit einem Vernetzer-Beschleuniger-System vernetzt.

Ein besonders bevorzugtes Vernetzer-Beschleuniger-System umfasst zumindest eine epoxidgruppenhaltige Substanz als Vernetzer und zumindest eine bei einer Temperatur unterhalb der Schmelztemperatur des Poly(meth)acrylats für die Verknüpfungsreaktion beschleunigend wirkende Substanz als Beschleuniger. Das System setzt einen Gehalt der Polymere an funktionellen Gruppen voraus, die mit Epoxidgruppen Vernetzungsreaktionen eingehen können. Als epoxidgruppenhaltige Substanzen eigenen sich multifunktionelle Epoxide, insbesondere bifunktionelle oder trifunktionelle (also solche Epoxide mit zwei bzw. drei Epoxidgruppen), aber auch höherfunktionelle Epoxide oder Mischungen unterschiedlich funktioneller Epoxide. Als Beschleuniger können bevorzugt Amine (formell als Substitutionsprodukte des Ammoniaks aufzufassen), beispielweise primäre und/oder sekundäre Amine; insbesondere tertiäre und/oder multifunktionelle Amine eingesetzt werden. Einsetzbar sind auch Substanzen, die mehrere Amingruppen aufweisen, wobei diese Amingruppen primäre und/oder sekundäre und/oder tertiäre Amingruppen sein können, insbesondere Diamine, Triamine und/oder Tetramine. Insbesondere werden solche Amine gewählt, die mit den Polymerbausteinen keine oder nur geringfügige Reaktionen eingehen. Als Beschleuniger können weiterhin beispielweise solche auf Phosphorbasis, wie Phosphine und/oder Phosphoniumverbindungen, eingesetzt werden.

Als funktionelle Gruppen des zu vernetzenden Poly(meth)acrylats eigenen sich besonders Säuregruppen (beispielsweise Carbonsäure-, Sulfonsäure- und/oder Phosphonsäuregruppen) und/oder Hydroxygruppen und/oder Säureanhydridgruppen und/oder Epoxidgruppen und/oder Amingruppen. Besonders bevorzugt enthält das Polymer einpolymerisierte Acrylsäure und/oder Methacrylsäure.

Es kann jedoch auch vorteilhaft sein, auf Beschleuniger zu verzichten, da diese zum Beispiel zum Vergilben neigen können (insbesondere stickstoffhaltige Substanzen). Als Vernetzer, die ohne Beschleunigerzusatz auskommen, eignen sich beispielweise Epoxycyclohexylderivate; insbesondere bei Anwesenheit von Carbonsäuregruppen im zu vernetzenden Poly(meth)acrylat. Dies kann zum Beispiel durch mindestens 5 Gew.-% einpolymerisierte Acrylsäure in das Polymer realisiert sein. In dem zu vernetzenden Polymer sind vorteilhaft insbesondere keine Protonenakzeptoren, keine Elektronenpaar-Donatoren (Lewisbasen) und/oder keine Elektronenpaarakzeptoren (Lewissäuren) zugegen. Die Abwesenheit dieser Substanzen bezieht sich dabei insbesondere auf extern zugesetzte, also nicht einpolymerisierte bzw. in das Polymergerüst eingebaute Beschleuniger; besonders bevorzugt sind aber weder extern zugesetzte noch einpolymerisierte, insbesondere gar keine Beschleuniger zugegen. Besonders bevorzugt ist der Vernetzer ein Epoxycyclohexylcarboxylat, insbesondere (3,4-Epoxycyclohexan)methyl-3,4-epoxycyclohexylcarboxylat (Uvacure^{®} 1500).

Das mindestens eine Polymer der erfindungsgemäßen Haftklebmasse kann auch ein Synthesekautschuk sein. Der Synthesekautschuk ist bevorzugt ein Acrylnitril-Butadien-Kautschuk oder ein Blockcopolymer mit einem Aufbau A-B, A-B-A, (A-B)ₙ, (A-B)ₙX oder (AB-A)ₙX,
worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl ≥ 2 stehen.

Insbesondere sind, sofern die erfindungsgemäße Haftklebmasse mehrere Synthesekautschuke enthält, alle Synthesekautschuke unabhängig voneinander ein Acrylnitril-Butadien-Kautschuk oder ein Blockcopolymer mit einem Aufbau wie vorstehend dargelegt. Die erfindungsgemäße Haftklebemasse kann somit auch Gemische verschiedener Synthesekautschuke mit einem Aufbau wie vorstehend enthalten.

Geeignete Blockcopolymere (Vinylaromatenblockcopolymere) umfassen also vorzugsweise einen oder mehrere gummiartige Blöcke B (Weichblöcke) und einen oder mehrere glasartige Blöcke A (Hartblöcke). Besonders bevorzugt ist mindestens ein Synthesekautschuk ein Blockcopolymer mit einem Aufbau A-B, A-B-A, (A-B)₂X, (A-B)₃X oder (A-B)₄X, wobei für A, B und X die vorstehenden Bedeutungen gelten. Insbesondere enthält die Haftklebmasse ein Gemisch aus mehreren Blockcopolymeren mit einem Aufbau A-B, A-B-A, (A-B)₂X, (A-B)₃X oder (A-B)₄X, das bevorzugt mindestens Diblockcopolymere A-B, Triblockcopolymere A-B-A und/oder Triblockcopolymere (A-B)₂X enthält.

Der Block A ist generell ein glasartiger Block mit einer bevorzugten Glasübergangstemperatur (Tg, DSC), die oberhalb der Raumtemperatur liegt. Besonders bevorzugt liegt die Tg des glasartigen Blockes bei mindestens 40 °C, insbesondere bei mindestens 60 °C, ganz besonders bevorzugt bei mindestens 80 °C und äußerst bevorzugt bei mindestens 100 °C. Der Anteil an Vinylaromatenblöcken A an den gesamten Blockcopolymeren beträgt bevorzugt 10 bis 40 Gew.-%, besonders bevorzugt 20 bis 33 Gew.-%. Vinylaromaten zum Aufbau des Blocks A umfassen bevorzugt Styrol und dessen Derivate, insbesondere Styrol und α-Methylstyrol. Der Block A kann somit als Homo- oder Copolymer vorliegen. Besonders bevorzugt ist der Block A ein Polystyrol.

Das Vinylaromatenblockcopolymer weist weiterhin generell einen gummiartigen Block B bzw. Weichblock mit einer bevorzugten Tg von kleiner als Raumtemperatur auf. Die Tg des Weichblocks ist besonders bevorzugt kleiner als 0 °C, insbesondere kleiner als -10 °C, beispielsweise kleiner als -40 °C und ganz besonders bevorzugt kleiner als -60 °C.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien, Dimethylbutadien und den Farnesen-Isomeren sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

Das Polymer der erfindungsgemäßen Haftklebmasse ist in einer Ausführungsform ein Blend aus mindestens einem Poly(meth)acrylat und mindestens einem Synthesekautschuk, insbesondere gemäß der vorstehenden Beschreibung dieser Polymere.

Die erfindungsgemäße Haftklebmasse enthält mindestens einen in seine Primärpartikel vereinzelbaren Füllstoff, der aus sphärischen Primärpartikeln mit einem mittleren Durchmesser von 50 nm bis 1000 nm besteht. Unter "in seine Primärpartikel vereinzelbar" wird dabei verstanden, dass die Primärpartikel, sofern sie nicht von vornherein vereinzelt vorliegen, durch Schereinwirkung auf die Polymermatrix getrennt werden können. Vom Bedeutungsgehalt des Begriffs "in seine Primärpartikel vereinzelbarer Füllstoff" umfasst sind somit auch agglomeriert vorliegende Füllstoffpartikel. "Agglomeriert vorliegend" bedeutet, dass die das Agglomerat bildenden Primärpartikel nur durch schwache, im Regelfall elektrostatische, durch Ladung oder Polarität hervorgerufene Kräfte, zusammengehalten werden. Davon abzugrenzen und nicht vom Bedeutungsgehalt des Begriffs "in seine Primärpartikel vereinzelbar" umfasst sind aggregiert vorliegende Füllstoffpartikel. "Aggregiert vorliegend" bedeutet, dass die das Aggregat bildenden Primärpartikel durch starke, im Regelfall durch kovalente oder ionische Bindungen hervorgerufene Kräfte, zusammengehalten werden. Solche Aggregate lassen sich nur sehr schwierig in kleinere Einheiten aufbrechen, insbesondere nicht durch auf die Polymermatrix einwirkende Scherkräfte.

Insbesondere umfasst der Füllstoff vereinzelt vorliegende Primärpartikel. Vereinzelt vorliegende Primärpartikel weisen keinen unmittelbaren Kontakt zu einem weiteren Primärpartikel auf. "Unmittelbarer Kontakt" beschreibt dabei ein direktes - nicht durch Klebmassematrix oder andere Bestandteile der Klebmasse unterbrochenes - Aneinandergrenzen der Grenzflächen zweier Primärpartikel. Insbesondere sind aggregiert vorliegende Primärpartikel nicht von den Begriffen "in seine Primärpartikel vereinzelbar" und "vereinzelt vorliegend" erfasst. Im Speziellen nicht davon erfasst sind verästelte oder dendritische Strukturen, wie sie beispielsweise von pyrogenen Kieselsäuren ausgebildet werden. Die vereinzelte Verteilung der Füllstoffprimärpartikel der erfindungsgemäßen Haftklebmasse kann mit elektronenmikroskopischen Verfahren wie REM (Rasterelektronenmikroskopie) oder TEM (Transmissionselektronenmikroskopie) bestimmt werden.

Unter "Primärpartikeln" werden in Übereinstimmung mit dem fachmännischen Verständnis Füllstoffteilchen verstanden, die mit geeigneten physikalischen Methoden wie Lichtmikroskopie oder Elektronenmikroskopie nach DIN 53206-1: 1972-08 als Individuen erkennbar sind.

Die erfindungsgemäßen Füllstoffpartikel sind nicht aus konzentrischen Schichten aufgebaut. Unter "aus konzentrischen Schichten aufgebaut" wird verstanden, dass vom Mittelpunkt des Partikels ausgehend in jeder Raumrichtung eine Abfolge von Schichten aus jeweils unterschiedlichem Material vorliegt. Daher ist bei den erfindungsgemäßen Füllstoffpartikeln das Feststoffmaterial der Oberfläche das gleiche wie im Inneren des Partikels. Die erfindungsgemäßen Füllstoffpartikel lassen sich insoweit insbesondere von als core-shell-Partikeln bekannten Füllstoffpartikeln abgrenzen, die einen Kern aus einem bestimmten Feststoffmaterial und eine Hülle aus einem davon verschiedenen Feststoffmaterial enthalten. Einschlüsse von Flüssigkeiten oder Gasen sind bei den erfindungsgemäßen Füllstoffpartikeln nicht ausgeschlossen; Flüssigkeiten und Gase gelten nicht als "Schichten" im vorstehenden Sinne. Bevorzugt sind die Primärpartikel des erfindungsgemäßen, in seine Primärpartikel vereinzelbaren Füllstoffs Vollkörper.

Das Material der erfindungsgemäßen Füllstoffpartikel umfasst Kunststoffe, weitere organische, insbesondere auch biobasierte, Verbindungen sowie anorganische, insbesondere glasartige oder keramische Materialien. Bevorzugt bestehen die Primärpartikel des mindestens einen in seine Primärpartikel vereinzelbaren Füllstoffs aus einem anorganischen Material. Insbesondere bestehen die Partikel des mindestens einen in seine Primärpartikel vereinzelbaren Füllstoffs aus einer Siliziumdioxid-Modifikation.

Weiter bevorzugt weisen die Primärpartikel des in seine Primärpartikel vereinzelbaren Füllstoffs keine Oberflächenfunktionalisierung auf. Dies erleichtert vorteilhaft die Herstellung bzw. Bereitstellung dieser Partikel.

Die erfindungsgemäßen Füllstoffpartikel weisen einen mittleren Durchmesser d(0,5) von 50 nm bis 1000 nm auf. Der mittlere Durchmesser d(0,5) wird erfindungsgemäß mittels Laserbeugung als Maximum der Verteilungskurve von anteiligem Volumen zu Partikelgröße an einer Suspension der Partikel in deionisiertem Wasser bestimmt. Insbesondere erfolgt die Bestimmung des mittleren Durchmessers mittels Laserbeugung bei einer Verdunkelung von 17 ±1%. Bevorzugt weisen die erfindungsgemäßen Füllstoffpartikel einen mittleren Durchmesser von 60 nm bis 1000 nm, stärker bevorzugt von 70 nm bis 500 nm, insbesondere von 80 nm bis 300 nm, beispielsweise von 90 nm bis 200 nm auf. Der mittlere Durchmesser kann anhand der angegebenen Methode mit handelsüblichen, dafür vorgesehenen Geräten bestimmt werden, beispielsweise mit der "Mastersizer"-Linie der Firma Malvern (z.B. Mastersizer 2000, Mastersizer 3000).

Unter "sphärischen Partikeln" werden Partikel mit einem Aspektverhältnis der Längen von kürzester Achse Lₘᵢₙ zu längster Achse Lₘₐₓ von größer als 0,5 verstanden. Zur Definition dieser Längen das Folgende:
Der Mittelpunkt des Partikels sei der geometrische Volumenschwerpunkt. Zur Beschreibung der Sphärizität werden Achsen verglichen, welche durch diesen Mittelpunkt laufen und zwei Punkte auf der Oberfläche des Partikels verbinden. Es gibt mindestens eine kürzeste Achse mit der Länge Lₘᵢₙ und mindestens eine längste Achse mit der Länge Lₘₐₓ. Die Sphärizität des Partikels ist nun definiert als das dimensionslose Aspektverhältnis Lₘᵢₙ / Lₘₐₓ und ist größer als 0 (Null) und kleiner oder gleich 1. Bei perfekter Sphärizität erreicht das Verhältnis den Wert 1. Oberflächenrauigkeiten, wie sie üblicherweise bei der Herstellung der Partikel entstehen, sind im Rahmen der hier behandelten Parameter unbeachtlich.

Unter "sphärischen Partikeln" werden gemäß dem Vorstehenden solche verstanden, welche ein Aspektverhältnis > 0,5 aufweisen, bevorzugt > 0,65, besonders bevorzugt > 0,85.

Geeignete Messmethoden sind je nach Partikelgröße optische Methoden, z.B. CAMSIZER^{®}, Retsch Gmbh, Germany, oder Elektronenmikroskopie.

Bevorzugt weist der in seine Primärpartikel vereinzelbare Füllstoff eine spezifische Oberfläche (BET) von < 50 m²/g auf. Ein Sphärizitätsmaß lässt sich auch durch das Verhältnis von spezifischer Oberfläche (BET, in m²/g) zum mittleren Durchmesser d(0,5) (in nm) ausdrücken. Diese Verhältnis beträgt bevorzugt < 1,0 m²/(g*nm) für die sphärischen Partikel des erfindungsgemäßen Füllstoffs.

Insbesondere sind die Primärpartikel im Wesentlichen kugelförmig, ganz besonders bevorzugt sind sie Kugeln.

Beispiele für kommerziell verfügbare, in der erfindungsgemäßen Haftklebmasse einsetzbare, in ihre Primärpartikel vereinzelbare Füllstoffe sind:
- "Nanobead NIST Traceable Particle Size Standard" (480 - 520 nm, gemessen mit CPS Disc Centrifuge, Model DC24000 (CPS Instruments, Inc.)), bei denen es sich um monodisperse Polystyrol-Mikrosphären mit einer Dichte von ungefähr 1,04 g/cm³ handelt und die bei Polysciences, Inc erhältlich sind;
- Silica Nanopartikel in verschiedenen Größen von Sigma Aldrich, unter anderem erhältlich in Größen von 50 nm (Artikelnummer 8030370), 100 nm (Artikelnummer 803308), und 200 nm (Artikelnummer 803847);
- Silica Nanopartikel mit Größen von 20 - 400 nm von nanoComposix, Inc., San Diego, USA, beispielsweise als Partikel mit der Größe 400 nm ±12 nm;
- Nanopartikel mit einer Größe von 800 nm aus Aluminium oder Bor-Nitrid von US Research Nanomaterials, Inc., USA.

Der in seine Primärpartikel vereinzelbare Füllstoff kann erfindungsgemäß in Anteilen von 5 bis 50 Gew.-%, bezogen auf das Gesamtgewicht der Haftklebmasse, in dieser vorliegen. Bevorzugt ist der in seine Primärpartikel vereinzelbare Füllstoff in der erfindungsgemäßen Haftklebmasse zu 10 bis 50 Gew.-%, bezogen auf das Gesamtgewicht der Haftklebmasse, enthalten. Als Füllstoff kann grundsätzlich auch eine Mischung mehrerer, dem "mindestens einen in seine Primärpartikel vereinzelbaren Füllstoff" entsprechender Füllstoffe vorliegen. Besonders bevorzugt beträgt der Anteil der Summe aller Füllstoffe an der erfindungsgemäßen Haftklebmasse 5 bis 70 Gew.-%, zum Beispiel 10 bis 50 Gew.-%, jeweils bezogen auf das Gesamtgewicht der Haftklebmasse.

Die erfindungsgemäße Haftklebmasse enthält zumindest teilweise expandierte Mikroballons. Die erfindungsgemäße Haftklebmasse kann weitere Füllstoffe enthalten, insbesondere mikroskalige Füllstoffe mit einem mittleren Durchmesser > 10 µm. Solche weiteren Füllstoffe können ausgewählt sein aus organischen und/oder anorganischen Hohlkugeln, expandierbaren und/oder expandierten Mikroballons, Glasschaum, Polymervollkugeln und Glasvollkugeln.

Als weitere Füllstoffe können auch pyrogene Kieselsäuren enthalten sein.

Die erfindungsgemäße Haftklebmasse ist ein Schaum. Bei dem Schaum kann es sich sowohl um einen mit Hohlkörpern, insbesondere mit Mikrohohlkörpern, als auch um einen mit Gas erzeugten Schaum handeln. Insoweit kann die erfindungsgemäße Haftklebmasse - sofern sie mit Hilfe von Hohlkörpern geschäumt ist - ein syntaktischer Schaum sein, ebenso kann sie - sofern sie mit einem Gas geschäumt ist - ein nicht-syntaktischer Schaum sein; auch eine Mischform ist denkbar. Das zur Schäumung gegebenenfalls erforderliche Gas kann bei der Herstellung des Schaums entweder direkt als Treibgas in die Masse eingebracht oder durch chemische Reaktion in der Masse enthaltener Komponenten in dieser erzeugt werden. Die erfindungsgemäße Haftklebmasse ist ein mit Mikrohohlkörpern erzeugter Schaum. Die erfindungsgemäße Haftklebmasse enthält daher neben dem erfindungsgemäßen, in seine Primärpartikel vereinzelbaren Füllstoff zumindest teilweise expandierten Mikroballons.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan gebräuchlich, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 µm Durchmesser im unexpandierten Zustand) und ihre zur Expansion benötigten Starttemperaturen (75 bis 220 °C) differenzieren. Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylenvinylacetat mit einer Mikroballonkonzentration von ca. 65 Gew.-%. Sowohl die Mikroballon-Dispersionen als auch die Masterbatche sind wie die unexpandierten Mikroballons als solche zur Herstellung erfindungsgemäßer Haftklebemassen geeignet.

In einer Ausführungsform der Erfindung werden die Mikroballons in unexpandiertem Zustand zusammen mit einem oder mehreren Weichmachern eingesetzt, beispielsweise mit Phthalaten, wasserlöslichen Weichmachern, Polyestern, Weichharzen, Cyclohexandicarbonsäurediestern, Phosphaten oder Polyphosphaten. Die erfindungsgemäße Haftklebmasse enthält somit bevorzugt mindestens einen Weichmacher. Das Gewichtsverhältnis Mikroballons : Weichmacher beträgt bevorzugt 3 : 2 bis 2 : 3, stärker bevorzugt 1,2 : 1 bis 0,8 :1, insbesondere 1,1 : 1 bis 0,9 : 1. Weichmacher setzen die Festigkeit der Haftklebemasse herab und begünstigen damit eine kohäsive Spaltung und somit ein vorhersagbares Versagensverhalten sowie den Tack, die "Anfassklebrigkeit" der Masse. Ein vorhersagbares, berechenbares Versagensverhalten von Verklebungen ist beispielsweise in bautechnischen Anwendungen (Fassadenverklebung) und im Automobilbau (Verklebung von Stoßfängern) von Interesse.

Bevorzugte Weichmacher sind niedrigviskose Polyester mit einer dynamischen Viskosität bei 20 °C von ≤ 2500 mPas, gemessen nach DIN EN ISO 3219 (beispielsweise Palamoll^{®} 652 der BASF, CAS-Nr. 208945-13-5). Derartige Weichmacher haben den zusätzlichen Vorteil, dass sie vergleichsweise gut kompatibel mit dem bzw. den Poly(meth)acrylat(en) sind und die Hüllen der Mikroballons nicht aufweichen.

Der Begriff "zumindest teilweise expandierte Mikroballons" wird erfindungsgemäß so verstanden, dass die Mikroballons zumindest soweit expandiert sind, dass damit eine Dichteverringerung der Klebmasse in einem technisch sinnvollen Ausmaß im Vergleich zu derselben Klebmasse mit den unexpandierten Mikroballons bewirkt wird. Dies bedeutet, dass die Mikroballons nicht zwingend vollständig expandiert sein müssen.

Der Ausdruck "zumindest teilweise expandiert" bezieht sich auf den Expansionszustand der individuellen Mikroballons und soll nicht ausdrücken, dass nur ein Teil der in Betracht kommenden Mikroballons (an)expandiert sein muss. Wenn also "0,1 bis 10 Gew.-% zumindest teilweise expandierte Mikroballons" in der Klebmasse enthalten sind, dann bedeutet dies, dass sämtliche dieser "0,1 bis 10 Gew.-% zumindest teilweise expandierten Mikroballons" zumindest teilweise expandiert im vorstehenden Sinne sind und unexpandierte Mikroballons nicht zu den "0,1 bis 10 Gew.-% zumindest teilweise expandierten Mikroballons" gehören.

Der weitere Füllstoff bzw. die weiteren Füllstoffe haben bevorzugt einen Volumenanteil, bezogen auf das Gesamtvolumen der erfindungsgemäßen Haftklebmasse, von 5 bis 75 %, insbesondere von 10 bis 55 %. Ebenfalls bevorzugt sind weitere Füllstoffe zu 5 bis 75 Gew.-%, bezogen auf das Gesamtgewicht der Haftklebmasse, in dieser enthalten.

Die erfindungsgemäße Haftklebmasse kann weitere Additive enthalten, um bestimmte Eigenschaften hervorzurufen oder diese stärker auszuprägen.

In einer Ausführungsform enthält die erfindungsgemäße Haftklebmasse mindestens ein Harz. Dabei handelt es sich bevorzugt um ein Klebharz. Als Harze im Sinne der Erfindung werden oligo- und polymere Verbindungen mit einem zahlenmittleren Molekulargewicht Mn von nicht mehr als 5.000 g/mol angesehen. Der maximale Harzanteil wird dabei durch die Mischbarkeit mit den - gegebenenfalls mit weiteren Stoffen abgemischten - höhermolekularen Polymeren begrenzt; es sollte sich jedenfalls zwischen Harz und Polymeren eine homogene Mischung ausbilden.

Die klebrig machenden Harze (Klebharze) sind bevorzugt ausgewählt aus der Gruppe bestehend aus Pinen-, Inden- und Kolophoniumharzen und deren disproportionierten, hydrierten, polymerisierten und/oder veresterten Derivaten und Salzen, aliphatischen und aromatischen Kohlenwasserstoffharzen, Terpenharzen und Terpenphenolharzen sowie C5-, C9- und anderen Kohlenwasserstoffharzen, jeweils für sich oder in Kombination miteinander. Bevorzugte Terpenphenolharze sind beispielsweise Dertophene T105 und Dertophene T110, ein bevorzugtes hydriertes Kolophoniumderivat ist Foral 85.

Die erfindungsgemäße Haftklebmasse kann Alterungsschutzmittel enthalten. Bevorzugt enthält die erfindungsgemäße Haftklebemasse in der oben beschriebenen Ausführungsform, in der sie mindestens einen Synthesekautschuk enthält, mindestens ein Alterungsschutzmittel.

Die erfindungsgemäße Haftklebmasse kann darüber hinaus Flammschutzmittel enthalten. Bevorzugte Flammschutzmittel sind hochmolekulare Phosphatester, beispielsweise Reofos^{®} RDP (CAS-Nr. 57583-54-7).

Ein weiterer Gegenstand der Erfindung ist ein Klebeband, das eine erfindungsgemäße Haftklebmasse umfasst.

In einer Ausführungsform bildet eine Schicht der erfindungsgemäßen Haftklebmasse das erfindungsgemäße Klebeband, das somit ein Transferklebeband ist. Bevorzugt enthält die erfindungsgemäße Haftklebmasse in dieser Ausführungsform mindestens ein Harz, das aus der Gruppe bestehend aus Pinen-, Inden- und Kolophoniumharzen und deren disproportionierten, hydrierten, polymerisierten und/oder veresterten Derivaten und Salzen, aliphatischen und aromatischen Kohlenwasserstoffharzen, Terpenharzen und Terpenphenolharzen sowie C5-, C9- und anderen Kohlenwasserstoffharzen ausgewählt ist. Besonders bevorzugt enthält die erfindungsgemäße Haftklebmasse in dieser Ausführungsform ein Terpenphenolharz, insbesondere 20 bis 40 Gew.-%, beispielsweise 25 bis 35 Gew.-% mindestens eines Terpenphenolharzes, jeweils bezogen auf das Gesamtgewicht der Haftklebmasse.

In einer anderen Ausführungsform des erfindungsgemäßen Klebebandes umfasst dieses mindestens eine weitere Klebmasse. Bevorzugt umfasst das erfindungsgemäße Klebeband auf mindestens einer Seite der erfindungsgemäßen Haftklebmasse eine weitere Haftklebmasse. Besonders bevorzugt umfasst das erfindungsgemäße Klebeband eine erfindungsgemäße Haftklebmasse, und diese weist auf ihrer Ober- und Unterseite jeweils eine weitere Haftklebmasse beziehungsweise auf. In diesen Ausführungsformen, in denen die erfindungsgemäße Haftklebmasse als Träger fungiert, kommen die mit der erfindungsgemäßen Haftklebmasse erreichbaren besonders hohen Festigkeiten, ihre Dehnbarkeit und Zähigkeit besonders zur Geltung.

Besonders bevorzugt enthalten die weiteren Haftklebmassen zu mindestens 50 Gew.-%, insbesondere zu mindestens 70 Gew.-%, beispielsweise zu mindestens 90 Gew.-%, jeweils bezogen auf das Gesamtgewicht der betreffenden Haftklebmasse, ein oder mehrere Poly(meth)acrylat(e), die auf die folgende Monomerenzusammensetzung zurückzuführen sind:
80 bis 95 Gew.-% 2-Ethylhexylacrylat und/oder n-Butylacrylat,
5 bis 20 Gew.-% Acrylsäure.

Die Poly(meth)acrylate der weiteren Haftklebmassen können jeweils vernetzt sein, bevorzugt auf die oben für die erfindungsgemäße Haftklebmasse beschriebene Weise, insbesondere durch thermische Vernetzung über mindestens ein oder mehrere Epoxycyclohexylderivate in Abwesenheit von Beschleunigern, insbesondere von Protonenakzeptoren, Elektronenpaardonatoren (Lewisbasen) und/oder Elektronenpaarakzeptoren (Lewissäuren).

Die Begriffe Ober- und Unterseite dienen im Rahmen dieser Schrift lediglich zur lokalen Unterscheidung der beiden Oberflächen der erfindungsgemäßen Haftklebmasse und sollen darüber hinaus keine weiteren Richtungsinformationen enthalten. Auf der "Oberseite" bedeutet also insbesondere auf einer der Seiten der entsprechenden Schicht, auf der Unterseite auf der anderen Seite der entsprechenden Schicht.

In einer weiteren Ausführungsform des erfindungsgemäßen Klebebandes ist die erfindungsgemäße Haftklebmasse auf einem Träger ausgewählt aus der Gruppe bestehend aus Folienträgern, insbesondere basierend auf PET, PE, PP, PU; und Trägern aus Geweben oder Gelegen angeordnet.

In einer weiteren Ausführungsform des erfindungsgemäßen Klebebandes enthält dieses mindestens eine Schicht, die aus einer Heißschmelzklebmasse besteht. Besonders bevorzugt besteht das Klebeband aus einer Schicht einer erfindungsgemäßen Haftklebmasse und einer Schicht, die aus einer Heißschmelzklebmasse besteht.

Unter einer "Heißschmelzklebmasse" - synonym auch als "hitzeaktivierbare Klebmasse" bezeichnet - wird eine Klebmasse verstanden, die bei Raumtemperatur nicht klebrig ist und erst durch Erhitzen genügend Adhäsion zu einem Substrat aufbauen kann, um eine klebende Verbindung mit diesem zu bewirken. Unter "Erhitzen" wird üblicherweise das Einwirken einer Temperatur im Bereich von etwa 60 bis etwa 200 °C, erfindungsgemäß insbesondere im Bereich von 120°C bis 200°C verstanden.

Bevorzugt ist die Heißschmelzklebmasse ausgewählt aus der Gruppe bestehend aus einer Polyolefinfolie, einer Polyurethanmasse und einem Copolyamid. Besonders bevorzugt ist die Heißschmelzklebmasse eine Polyolefinfolie. Das Polyolefin kann dabei auf ein oder mehrere Olefinmonomere zurückgeführt werden. Insbesondere ist das Material der Polyolefinfolie ausgewählt aus Polyethylen, Polypropylen, Ethylen-Propylen-Copolymeren und Mischungen dieser Polymere. Besonders bevorzugt ist die Polyolefinfolie eine Polypropylenfolie, insbesondere eine Folie aus einem heterophasigen Polypropylen-Copolymer.

Das Klebeband dieser Ausführungsform wird bevorzugt zum Verkleben von Kunststoffteilen auf Glas oder lackierten Substraten verwendet, beispielsweise im Automobilbau. Zum Beispiel kann dieses Klebeband zum Verkleben sogenannter Weather Strips eingesetzt werden. Besonders bevorzugt wird dieses Klebeband zum Verkleben von Kunststoffprofilen auf Glasscheiben oder Karosserieteilen von Fahrzeugen verwendet, insbesondere zum Verkleben von Dichtungen im Türbereich und/oder von Gummi- und anderen Kunststofflippen an Glasscheiben.

In einer Ausführungsform ist die erfindungsgemäße Haftklebmasse im erfindungsgemäßen Klebeband mittels einer physikalischen Methode, insbesondere mittels einer Plasmabehandlung, aktiviert.

Das erfindungsgemäße Klebeband kann als Tellerrolle oder kreuzgewickelte Spule konfektioniert werden. Selbstverständlich können eine oder beide Seiten des Klebebandes mit einem Releaseliner bedeckt sein. Im Falle kreuzgewickelter Spulen ist es üblich, zumindest einseitig einen überstehenden Liner zu verwenden.

Gegenstand der Erfindung ist auch die Verwendung eines erfindungsgemäßen Klebebandes zum Verkleben auf einem mit einem Primer bzw. Haftvermittler oder mit einer physikalischen Methode, z.B. mittels Plasmabehandlung, vorbehandelten Untergrund. Die hohe Festigkeit, Dehnbarkeit und Zähigkeit erfindungsgemäßer Klebebänder wird dabei vorteilhaft maximal ausgenutzt.

Gegenstand der Erfindung ist auch ein Verfahren zur Herstellung einer erfindungsgemäßen Haftklebmasse, welches das lösemittelfreie Compoundieren der Haftklebmasse in einem kontinuierlichen Aggregat umfasst. Das kontinuierliche Aggregat ist bevorzugt ein Doppelschneckenextruder oder ein Planetwalzenextruder.

Ein weiteres Verfahren zur Herstellung einer erfindungsgemäßen Haftklebmasse umfasst mindestens einen Polymerisationsschritt zur Herstellung des mindestens einen Polymers, wobei der in seine Primärpartikel vereinzelbare Füllstoff vor Ende des letzten Polymerisationsschritts zur Herstellung des mindestens einen Polymers zugegeben wird. Besonders bevorzugt wird mindestens ein Polymerisationsschritt zur Herstellung des mindestens einen Polymers mittels energiereicher Strahlung initiiert, insbesondere mittels UV-Strahlung.

### Beispiele

Kommerziell erhältliche, eingesetzte Chemikalien (siehe nachtstehende Tabelle 1)

| Chemische Verbindung | Handelsname | Hersteller | CAS-Nr. |
|---|---|---|---|
| Bis-(4-tert-butylcyclohexyl)peroxydicarbonat | Perkadox 16 | Akzo Nobel | 15520-11-3 |
| 2,2'-Azobis(2-methylpropionitril), AIBN | Vazo 64 | DuPont | 78-67-1 |
| 2,2-Dimethoxy-1,2-diphenylethan-1-one | Irgacure 651 | Ciba Specialty Chemicals | 24650-42-8 |
| 1,6-Hexandioldiacrylat | HDDA | Sigma Aldrich | 13048-33-4 |
| Pentaerythrittetraglycidether | Polypox R16 | UPPC AG | 3126-63-4 |
| 3,4-Epoxycyclohexylmethyl-3,4-epoxycyclohexancarboxylat | Uvacure^{®} 1500 | Cytec Industries Inc. | 2386-87-0 |
| Isophorondiamin | IPDA | | 2855-13-2 |
| Acrylsäure-n-butylester | n-Butylacrylat | Rohm & Haas | 141-32-2 |
| Acrylsäure | Acrylsäure rein | BASF | 79-10-7 |
| Acrylsäure-2-ethylhexylester | 2-Ethylhexylacrylat | Brenntag | 103-11-7 |
| Acrylsäure-Methylester | Methylacrylat | BASF | 96-33-3 |
| Isooctylacrylat, Ester von Isooctylalkohol und Acrylsäure | Isooctylacrylat, IOA | Sartomer Company (Cray Valley), France | 29590-42-9 |
| Lineares Styrol-Butadien-Styrol-Triblockcopolymer; mit 78 Gew.-% Diblock, Blockpolystyrolgehalt: 33 Gew.-% | Kraton D1118 | Kraton Polymers | 9003-55-8 |
| Lineares Styrol-Butadien-Styrol-Triblockcopolymer; mit 17 Gew.-% Diblock, Blockpolystyrolgehalt: 28 Gew.-% | Kraton D1102 | Kraton Polymers | 9003-55-8 |
| festes α-Pinen-Klebharz mit einer Ring und Ball-Erweichungstemperatur von 115 °C und einem DACP von 35 °C | Dercolyte A115 | DRT resins | 25766-18-1 |
| Terpenphenolharz (Erweichungspunkt 110 °C; Mw = 500 - 800 g/mol; D = 1,50) | Dertophene T110 | DRT resins | 25359-84-6 |
| Mikroballons (trocken-unexpandierte Mikrosphären, Durchmesser 10 - 16 µm, Expansions-Starttemperatur 123 - 133 °C, TMA-Dichte ≤ 17 kg/m³) | Expancel 920 DU 40 | Expancel Nobel Industries | |
| Mikroballons (trocken-unexpandierte Mikrosphären, Durchmesser 18 - 24 µm, Expansions-Starttemperatur 123 - 133 °C, TMA-Dichte ≤ 14 kg/m³) | Expancel 920 DU 80 | Expancel Nobel Industries | |
| Keramikhohlkugeln (Durchmesser ca. 65 µm, maximale Dichte 0,85 g/cm³) | E-Spheres SL 150 | Omega Minerals Germany | |
| Sphärisches amorphes Siliziumdioxid (96-99% SiO2); BET Oberfläche 20 m²/g; mittlerer Durchmesser 150 nm | Sidistar T120U | Elkem | 69012-64-2 |
| SiLibeads Glaskugeln Typ S, polierte runde Glasvollkugeln aus Kalknatronglas; mittlerer Durchmesser 7 µm; Schüttgewicht 0,7 kg/dm³; Sphärizität >= 0,89 (Verhältnis Breite zu Länge) | SiLiBeads 0 - 20 µm | Sigmund Lindner Gmbh, Germany | 65997-17-3 |
| SiLibeads Glaskugeln Typ S, polierte runde Glasvollkugeln aus Kalknatronglas; mittlerer Durchmesser 70 µm; Schüttgewicht 0,7 kg/dm³; Sphärizität >= 0,89 (Verhältnis Breite zu Länge) | SiLiBeads 40 - 70 µm | Sigmund Lindner Gmbh, Germany | 65997-17-3 |
| SiLibeads Glaskugeln Typ S, polierte runde Glasvollkugeln aus Kalknatronglas; mittlerer Durchmesser 220 µm; Schüttgewicht 0,7 kg/dm³; Sphärizität >= 0,89 (Verhältnis Breite zu Länge) | SiLiBeads 150 - 250 µm | Sigmund Lindner Gmbh, Germany | 65997-17-3 |
| Polierte runde Glasvollkugeln aus Kalknatronglas; mittlerer Durchmesser 3 µm | OMicron NP3-P0 | Sovitec | 65997-17-3 |
| Mikroglas Glass Flakes, Glasplättchen aus Borosilicat-Glas; Dicke ca. 5 µm, Größe ca. 45 µm | RCF015 | MÜHLMEIER GMBH & CO. KG, Germany | |
| Mikroglas Glass Flakes, Glasplättchen aus Borosilicat-Glas; Dicke ca. 5 µm, Größe ca. 45 - 300 µm | RCF160 | MÜHLMEIER GMBH & CO. KG, Germany | |
| Blähglasgranulat, Korngröße 0,04 mm - 0,125 mm, Schüttdichte 530 kg/m³ | Poraver 0,04-0,125 | Dennert Poraver GmbH | |

### PRÜFMETHODEN

### Gelpermeationschromatographie GPC

Die Angaben des gewichtsmittleren Molekulargewichtes Mw und der Polydispersität PD in dieser Schrift beziehen sich auf die Bestimmung per Gelpermeationschromatographie. Die Bestimmung erfolgt an 100 µl klarfiltrierter Probe (Probenkonzentration 4 g/I). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µ, 10³ Å, ID 8,0 mm · 50 mm verwendet. Zur Auftrennung werden die Säulen des Typs PSS-SDV, 5 µ, 10³ Å sowie 105 Å und 106 Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung)].

### Glasübergangstemperatur - Dynamische Scanning Kalorimetrie (DSC)

Dazu werden ca. 5 mg einer unbehandelten Polymerprobe in ein Aluminiumtiegelchen (Volumen 25 µL) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf -150 °C abgekühlt, dann mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm folgendermaßen erkannt:
Der jeweils linear verlaufende Bereich der Messkurve vor und nach der Stufe wird in Richtung steigender (Bereich vor der Stufe) bzw. fallender (Bereich nach der Stufe) Temperaturen verlängert. Im Bereich der Stufe wird eine Ausgleichsgerade□parallel zur Ordinate so gelegt, dass sie die beiden Verlängerungslinien schneidet, und zwar so, dass zwei Flächen (zwischen der jeweils einen Verlängerungslinie, der Ausgleichsgeraden und der Messkurve) gleichen Inhalts entstehen. Der Schnittpunkt der so positionierten Ausgleichsgeraden mit der Messkurve ergibt die Glasübergangstemperatur.

### Dynamische Scherfestigkeit

Das zu untersuchende Klebeband wurde quadratisch auf eine Kantenlänge von 25 mm zugeschnitten, zwischen zwei Stahlplatten überlappend verklebt und 1 Minute lang mit 0,9 kN angedrückt. Gegebenenfalls (in den Beispielen angegeben) wurden die Stahlplatten vor dem Aufbringen des Klebebandes mit dem Primer tesa^{®} 60153 Adhesion Promoter Fast Cure vorbehandelt und 5 min an der Luft gelagert, damit das Lösemittel aus dem Primer verdampfen konnte.

Nach einer Lagerung von 24 h bei 23 °C und 50% rel. Feuchte wurde der hergestellte Verbund in einer Zugprüfmaschine der Firma ZWICK mit 50 mm/min bei 23 °C und 50% rel. Feuchte so getrennt, dass die beiden Stahlplatten unter einem Winkel von 180° auseinander gezogen wurden. Die Maximalkraft wurde in N/cm² ermittelt.

### Verbundfestigkeit - dynamischer T-Block-Test

Zwei jeweils mit einem Loch versehene, T-förmige Aluminiumkörper (T-Blöcke, 25 x 25 x 25 mm) wurden für 30 min in Aceton gelagert, mit einem Aceton-getränkten Tuch abgewischt und 10 min an der Luft getrocknet. Das auf 25 x 25 mm zugeschnittene, zu untersuchende Klebeband wurde auf die Grundfläche eines der T-Blöcke aufgebracht, nach Abziehen des Releaseliners wurde an der freien Seite der zweite T-Block verklebt. Die Verklebung wurde für 15 s mit 110 N verpresst. Gegebenenfalls (in den Beispielen angegeben) wurden die T-Blöcke vor dem Aufbringen des Klebebandes mit dem Primer tesa^{®} 60153 Adhesion Promoter Fast Cure vorbehandelt und 5 min an der Luft gelagert, damit das Lösemittel aus dem Primer verdampfen konnte.

Der Prüfkörper-Verbund wurde 24 h bei 23 °C und 50 % relativer Luftfeuchte gelagert.

Die miteinander verklebten T-Blöcke wurden anschließend mittels Haken in eine Zugprüfmaschine eingespannt. Der Prüfkörper wurde senkrecht zur Klebefläche mit 300 mm / min auseinandergezogen. Die Maximalkraft als Mittelwert aus jeweils fünf Messungen in N/cm² sowie das Bruchbild wurden ermittelt.

### 90° Klebkraft Stahl

Die Bestimmung der Klebkraft Stahl erfolgte bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wurde vor der Messung gereinigt und konditioniert. Dazu wurde die Platte zunächst mit Aceton abgewischt und danach 5 Minuten an der Luft liegen gelassen, damit das Lösungsmittel abdampfen konnte.

Die dem Prüfuntergrund abgewandte Seite des Klebebandes wurde dann mit einer 50 µm Aluminiumfolie abgedeckt, wodurch verhindert wurde, dass sich das Muster bei der Messung dehnt. Danach erfolgte das Anrollen des Prüfmusters auf den Stahluntergrund. Hierzu wurde das Tape mit einer 2 kg Rolle 5mal hin und her, bei einer Aufrollgeschwindigkeit von 10 m/min, überrollt. Gegebenenfalls (in den Beispielen angegeben) wurde die Stahlplatte vor dem Aufbringen des Klebebandes mit dem Primer tesa^{®} 60153 Adhesion Promoter Fast Cure vorbehandelt und 5 min an der Luft gelagert, damit das Lösemittel aus dem Primer verdampfen konnte.

Der Prüfkörper-Verbund wurde 3 d bei 23 °C und 50 % relativer Luftfeuchte gelagert, abweichende Lagerungen sind bei den Beispielen angegeben. Nach der Lagerung wurde die Stahlplatte in eine spezielle Halterung geschoben, die es ermöglichte, das Muster in einem Winkel von 90 ° senkrecht nach oben abzuziehen (300 mm/min). Die Klebkraftmessung erfolgte mit einer Zwick-Zugprüfmaschine.

Die Messergebnisse sind in N/cm angegeben und sind gemittelt aus drei Messungen.

### Kraft-Dehnungs-Verhalten (Tensile strength)

Das zu testende Klebeband wurde mittels einer Stanzform als Zugprüfhantel nach ISO8256 Type 3 zugeschnitten. Das Klebeband wurde in eine Zugprüfmaschine mit einem Klemmbackenabstand von 30 mm spannungsfrei eingespannt und anschließend mit einer Geschwindigkeit von 300 mm/min bis zum Bruch bzw. bis zur maximalen Verfahrenslänge der Zugprüfmaschine auseinander gezogen. Dabei wurden die mechanischen Kennwerte des zu prüfenden Klebebandes aufgezeichnet.

### Scherstandzeit (SSZ):

Die Musterpräparation erfolgte in einem Prüfklima von 23 °C +/- 1 °C Temperatur und 50 % +/- 5 % rel. Luftfeuchte. Das Prüfmuster wurde auf 13 mm zugeschnitten und auf eine Stahlplatte geklebt. Die Verklebungsfläche betrug 20 mm x 13 mm (Länge x Breite). Vor der Messung wurde die Stahlplatte gereinigt und konditioniert. Dazu wurde die Platte zunächst mit Aceton abgewischt und danach 5 Minuten an der Luft liegen gelassen, damit das Lösungsmittel abdampfen konnte. Nach dem Verkleben wurde die offene Seite mit einer 50 µm dicken Aluminiumfolie verstärkt und mit einer 2 kg Rolle 2mal hin und her überrollt. Anschließend wurde eine Gurtschlaufe am überstehenden Ende des Dreischichtverbundes angebracht. Das Gebilde wurde dann an einer geeigneten Vorrichtung aufgehängt und mit 10 N belastet. Die Aufhängvorrichtung war so beschaffen, dass das Gewicht die Probe in einem Winkel von 179° +/- 1 ° belastete. Dadurch wurde sichergestellt, dass sich das Klebeband nicht von der Plattenunterkante abschälen konnte. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wurde die offene Seite zunächst mit der 50 µm dicken Aluminiumfolie verstärkt, das Trennmaterial entfernt und auf die Prüfplatte analog der Beschreibung geklebt. Die Messung wurde bei 70 °C durchgeführt.

### Herstellung der Klebmassen

### Herstellung Haftkleber AL1:

Ein für radikalische Polymerisationen konventioneller 200 I-Glasreaktor wurde mit 9,6 kg Acrylsäure, 20,0 kg Butylacrylat, 50,4 kg 2-Ethylhexylacrylat und 53,4 kg Aceton/ Benzin 60/95 (1:1) befüllt. Nach 45minütiger Durchleitung von Stickstoffgas unter Rühren wurde der Reaktor auf 58 °C hochgeheizt und 60 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 60 g AIBN hinzugegeben. Nach 4 h und 8 h wurde mit jeweils 20,0 kg Aceton/Benzin 60/95 (1:1) - Gemisch verdünnt. Zur Reduktion der Restinitiatoren wurden nach 8 h und nach 10 h jeweils 180 g Bis-(4-tert-butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,2 Gew.-% Uvacure^{®} 1500 abgemischt, auf einen Feststoffgehalt von 30 % mit Aceton verdünnt und dann aus Lösung auf eine silikonisierte Trennfolie (50 µm Polyester) beschichtet (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C). Der Masseauftrag betrug 50 g/m².

### Herstellung Haftkleber AL2:

Es wurden 2,5 kg Kraton D1102, 2,5 kg Kraton D1118 mit 5,0 kg Dercolyte A115 in 40 l eines Lösemittelgemischs Benzin/Aceton/Toluol (4:2:1) gegeben und in einem konventionellen Flügelmischer 24 h gerührt. Das Gemisch wurde dann aus Lösung auf eine silikonisierte Trennfolie (50 µm Polyester) beschichtet und getrocknet. Der Masseauftrag betrug 50 g/m².

### Herstellung hitzeaktivierbare Schicht AL3:

Als hitzeaktivierbare Schicht wurde eine 50 µm dicke Folie hergestellt aus Polypropylen-BA 110 CF (Borealis) von der Firma Renolit AG, Salzgitter, eingesetzt.

### Herstellung Basispolymer HM1:

Ein für radikalische Polymerisationen konventioneller 100 I-Glasreaktor wurde mit 1,5 kg Acrylsäure, 25,5 kg Butylacrylat, 13,0 kg 2-Ethylhexylacrylat und 26,7 kg Aceton/ Isopropanol (94:6) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Isopropanol (94:6) Gemisch verdünnt. Zur Reduktion der Restinitiatoren wurden nach 8 und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat hat einen K-Wert von 77,8, einen Feststoffgehalt von 55,9 %, ein mittleres Molekulargewicht von Mw = 1.040.000 g/mol, Polydispersität D (Mw/Mn) = 13,3 und eine statische Glasübergangstemperatur von Tg = -45,1 °C.

### Herstellung Basispolymer HM2:

Ein für radikalische Polymerisationen konventioneller Reaktor wurde mit 72,0 kg 2-Ethylhexylacrylat, 20,0 kg Methylacrylat, 8,0 kg Acrylsäure und 66,6 kg Aceton/ Isopropanol (94:6) befüllt. Nach 45minütiger Durchleitung von Stickstoffgas unter Rühren wurde der Reaktor auf 58 °C hochgeheizt und 50 g AIBN, gelöst in 500 g Aceton, hinzugegeben. Anschließend wurde das äußere Heizbad auf 75 °C erwärmt und die Reaktion konstant bei dieser Außentemperatur durchgeführt. Nach 1 h wurden erneut 50 g AIBN, gelöst in 500 g Aceton, zugegeben und nach 4 h wurde mit 10 kg Aceton/Isopropanol-Gemisch (94:6) verdünnt.

Nach 5 h sowie nach 7 h wurde jeweils mit 150 g Bis-(4-tert-butylcyclohexyl)-peroxydicarbonat, jeweils gelöst in 500 g Aceton, nachinitiiert. Nach 22 h Reaktionszeit wurde die Polymerisation abgebrochen und auf Raumtemperatur abgekühlt. Das Produkt hatte einen Feststoffgehalt von 55,8 %. Das resultierende Polyacrylat hatte einen K-Wert von 58,9, ein mittleres Molekulargewicht von Mw = 748.000 g/mol, eine Polydispersität von D (Mw/Mn) = 8,9 und eine statische Glasübergangstemperatur von Tg = - 35,2 °C.

### Herstellung Basispolymer HM3:

Hergestellt nach dem für HM1 beschriebenen Verfahren, aber mit einem Monomerengemisch bestehend aus 36,0 kg 2-Ethylhexylacrylat und 4,0 kg Acrylsäure. Das resultierende Polyacrylat hatte einen K-Wert von 51, ein mittleres Molekulargewicht von Mw = 1.220.000 g/mol, eine Polydispersität von D (Mw/Mn) = 32,5 und eine statische Glasübergangstemperatur von Tg = - 43 °C.

### Herstellung Basispolymer HM4:

Es wurden 90 kg Isooctylacrylat, 10 kg Acrylsäure, 0,15 kg Irgacure TM651 und 0,03 kg Isooctylthioglycolat gemischt. Die Zusammensetzung wurde in Päckchen mit den Abmessungen 10 cm x 5 cm x 0,5 cm überführt. Die Folie dieser Päckchen bestand aus einem Ethylen-Vinylacetat-Copolymer und hatte eine Dicke von 64 µm. Die Päckchen wurden in ein Wasserbad getaucht und gleichzeitig einer UV-Strahlung (280 nm bis 500 nm) mit einer Intensität von 3,5 mW/cm² und einer totalen Energie von 1.627 mJ/cm² ausgesetzt. Es resultierte jeweils ein haftklebriges Polymer mit einem mittleren Molekulargewicht Mw von 5.6 x 10⁵ g/mol.

### Herstellung Basispolymer HM5:

Das Basispolymer HM5 entspricht in seinen Elastomer-Komponenten, dem Harz und deren Verhältnissen denen des Haftklebstoffs AL2, wurde jedoch lösemittelfrei gemäß V1 hergestellt.

### Herstellung Basispolymer HM6:

Das Basispolymer HM6 ist ein Blend und basiert auf dem Acrylat-Polymer HM2, wobei zusätzlich 30 Gew.-% des Elastomers Kraton D1118 sowie 15 Gew.-% des Harzes Dertophene T105 zugegeben werden. Die Herstellung erfolgte gemäß dem lösemittelfreien Verfahren V1.

### Verfahren:

### Verfahren V1:

### Aufkonzentration / Herstellung der Haftkleber:

Sofern in Lösung vorliegend, wurde das jeweilige Basispolymer zuerst mittels Einschneckenextruder (Aufkonzentrationsextruder, Berstorff GmbH, Deutschland) weitestgehend vom Lösemittel befreit. Die Drehzahl der Schnecke betrug 150 U/min, der Motorstrom 15 A, es wurde ein Durchsatz von 58,0 kg flüssig/h realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Polymers lag bei ca. 115 °C. Der Feststoffgehalt betrug nach diesem Aufkonzentrationsschritt 99,8%. Die Masse wurde auf Raumtemperatur abgekühlt.

### Herstellung geschäumte Masse:

Sofern eingesetzt, wurde das aufkonzentrierte Acrylat-Basispolymer in einem Fütterextruder (Einschneckenförderextruder der Firma TROESTER GmbH & Co KG, Deutschland) aufgeschmolzen und mit diesem als Polymerschmelze über einen beheizbaren Schlauch in einen Planetwalzenextruder (PWE) der Firma Entex (Bochum) gefördert (es wurde insbesondere ein PWE mit vier unabhängig voneinander heizbaren Modulen T1, T2, T3, T4 eingesetzt).

Elastomerkomponenten wurden in T1 des Planetwalzenextruders über eine dafür vorgesehene Dosierstelle zugegeben. Ebenfalls in T1 wurden an einer weiteren Dosierstelle bei Bedarf Mikroballons hinzugefügt und mittels eines Mischelements homogen in die Vormischung eingearbeitet. Sofern nicht in den Beispielen anders angegeben, wurden als Mikroballons 2 Gew.-% Expancel 920DU40 zugegeben.

Über zwei Sidefeeder in T1 und T2 wurden bei Bedarf scherunempfindliche Füllstoffe, insbesondere auch die erfindungsgemäßen nanoskaligen Füllstoffe, zugegeben. Sofern ein Harz zugegeben wurde, wurde dieses zuvor aufgeschmolzen und in T2 zugegeben. Alle Komponenten wurden zu einer homogenen Polymerschmelze gemischt. Soweit nicht anders angegeben, betrugen alle eingestellten Temperaturen 100 °C. In T3 und T4 wurde eine Temperatur von 160 °C eingestellt, um die Mikroballons in diesen Zonen aufzuschäumen.

Mittels einer Schmelzepumpe und eines beheizbaren Schlauches wurde die Polymerschmelze in einen Doppelschneckenextruder (Firma Berstorff, alle Zonen 100°C, 100 min-1) überführt, und die Vernetzer- und Beschleunigerkomponeten wurden bei Bedarf hinzugefügt. Sofern nicht in den Beispielen anders angeben, wurden als Vernetzer Polypox R16 zu 0,14 Gew.-% und als Beschleuniger IPDA zu 0,2 Gew-%, jeweils bezogen auf das Acrylatpolymer, eingesetzt. Wenn kein Acrylatpolymer eingesetzt wurde, dann wurde auch kein Vernetzer zugesetzt.

Sofern ein scher- und bruchempfindlicher Füllstoff eingesetzt wurde (z.B. Glashohlkugeln), wurde dieser über einen Sidefeed im ersten Drittel des Doppelschneckenextruders hinzugefügt.

Anschließend wurde die gesamte Mischung in einem Vakuumdom bei einem Druck von 175 mbar von allen Gaseinschlüssen befreit. Im Anschluss an die Vakuumzone befand sich auf der Schnecke ein Blister, welcher einen Druckaufbau in dem darauf folgenden Segment ermöglichte. Die entstandene Schmelzmischung wurde in eine Breitschlitzdüse überführt und extrudiert.

Es entstand eine geschäumte Selbstklebemasse, welche anschließend mittels eines Walzenkalanders zwischen zwei silikonisierten PET-Folien zu einer 1 mm dicken Bahn ausgeformt wurde.

Gegebenenfalls wurden die erhaltenen Schäume ein- oder beidseitig mit Haftklebmasseschichten laminiert (jeweils bei den Beispielen angegeben).

### Verfahren V2:

Das jeweilige Basispolymer wurde in einem Fütterextruder (Einschneckenförderextruder der Firma TROESTER GmbH & Co KG, Deutschland) aufgeschmolzen und mittels eines Heizschlauchs in einen Doppelschneckenextruder (Firma Berstorff) überführt. Die Temperaturen im ersten Extruder und in dem flexiblen Schlauch am Extruderausgang betrugen 90 °C. Der Doppelschneckenextruder war mit drei zusätzlichen Dosierstellen versehen und wurde mit einer Rotationsgeschwindigkeit von 200 U/min und einer Durchflussrate von 10 kg/h betrieben. Wenn weitere Füllstoffe oder Elastomere zugegeben wurden, geschah dies an den ersten beiden Dosierstellen.

Expandierbare polymere Mikrosphären wurden an der dritten Dosierstelle nach etwa drei Vierteln der Extruderstrecke zugegeben. Sofern nicht in den Beispielen anders angegeben, wurden 2 Gew.-% Expancel 920DU40 zugegeben. Druck und Temperatur wurden so eingestellt, dass im Wesentlichen noch keine Expansion der Mikrosphären stattfand.

Das Extrudat wurde mittels eines geheizten Transferschlauchs in eine geheizte Breitschlitzdüse gefördert und extrudiert. Die Temperatur in Transferschlauch und Düse wurde auf 200°C eingestellt. Durch Druckabfall in der Düse expandierten die expandierbaren Mikrosphären. Im Wesentlichen war der Expansionsvorgang abgeschlossen, bevor der Schaum die Düse verließ.

Die extrudierte Bahn wurde auf einer Kühlrolle auf eine Temperatur von etwa 25 °C abgekühlt und dann auf einen 0,1 mm dicken Polyethylen-Releaseliner aufgebracht. Der resultierende Schaum hatte eine Dicke von ca. 1 mm. Der extrudierte Schaum wurde mittels Elektronenbestrahlung vernetzt (Electron Crosslinking AB, Halmstad, Schweden, mit Beschleunigungsspannung 300 keV, 6 m/min, Dosis 4 Mrad).

Gegebenenfalls wurden die erhaltenen Schäume ein- oder beidseitig mit Haftklebmasseschichten laminiert (jeweils bei den Beispielen angegeben).

### Verfahren V3 - Herstellung von Acrylatschaum mit UV-Polymerisation:

87,5 kg 2-Ethylhexylacrylat, 12,5 kg Acrylsäure und 0,04 kg Irgacure 651 wurden vermischt und unter Stickstoffatmosphäre mittels UV-Bestrahlung (280 nm bis 500 nm, 1 mW/cm²) bis zu einer Viskosität von 3,6 Pas (Brookfield) polymerisiert. Nach Zugabe von 0,1 Gew.-% (bezogen auf das Gesamtgewicht des Sirups) Irgacure 651, 0,056 Gew.-% Hexandioldiacrylat und 15 Gew.-% Hohlkugeln E-Spheres SL 150 und bei Bedarf weiterer Füllstoffe (siehe nachfolgende Beispiele) wurde die Zusammensetzung mit einem Propellermischer bei 500 U/min 10 min gemischt und danach unter Verwendung einer Vakuumpumpe vorsichtig entgast. Das Gemisch wurde mittels eines Rakels mit einer Dicke von etwa 1 mm auf eine mit Silikontrennmittel versehene, 50 µm dicke PET-Folie beschichtet und mit einer weiteren gleichartigen Folie abgedeckt. Die erhaltene schaumartige Schicht wurde in einer Stickstoffatmosphäre mittels UV-Lampen bei einer mittleren Bestrahlungsstärke von 0,75 mW/cm² etwa 180 Sekunden bis zu einer Umwandlung von 45% polymerisiert. In einer zweiten Stufe wurde mit einer mittleren Bestrahlungsstärke von 100 mW/cm² etwa 10 Sekunden bis zu einem Umwandlungsgrad von 95% bestrahlt.

### Verfahren K1

Soweit Klebmasseschichten AL1, AL2 oder AL3 auf geschäumte Trägerschichten aufgebracht werden sollten, wurden, um die Verankerung der Haftklebmassen auf den Trägerschichten zu verbessern, die Haftklebmassen und die Trägerschichten vor der Kaschierung an einer Corona-Station physikalisch vorbehandelt (Corona-Anlage der Firma VETAPHONE, Dänemark, in Umgebungsluft, 50 W·min/m²). Diese Behandlung führte nach der Herstellung des jeweiligen Schichtverbundes zu einer verbesserten chemischen Anbindung an die geschäumte Trägerschicht. Nach der Vorbehandlung wurden die auf Trennfolien vorliegenden Haftklebmassen per Hand mittels Anrollen auf die Trägerschichten kaschiert.

### Verfahren P1

Mit dem Verfahren P1 wird gegebenenfalls mittels physikalischer Oberflächenbehandlung die Verklebungsfestigkeit der Haftklebmassen gesteigert.

Es wurde eine Laboranlage FG5001 der Firma Plasmatreat GmbH (Steinhagen) mit einer Rotationsdüse RD1004 zur Behandlung der Oberflächen verwendet. Die Düse wurde mit einer Geschwindigkeit von 5 m/min in 10 mm Abstand zur Oberfläche geführt. Bei Verklebung einer Haftklebmasse auf einem Substrat wurden sowohl die Oberfläche der Klebmasse, welche dem Substrat zugewandt ist, als auch die Oberfläche des Substrats, welche der Klebmasse zugewandt ist, behandelt. Die behandelten Oberflächen wurden sofort nach der Behandlung zusammengeführt.

### Beispiele

Beispiel 1 (nicht erfindungsgemäß): Dreischichtiges Klebeband mit HM1 als Trägerschicht und äußeren Haftklebschichten AL1, hergestellt nach V1 und K1. HM1 wurde jedoch zur Vernetzung kein Polypox R16 und kein IPDA zugesetzt, sondern 0,2 Gew.-% Uvacure^{®} 1500. Anstelle von Expancel 920DU40 wurden 2 Gew.-% Mikroballons Expancel^{®} 920DU80 zugesetzt (Gew.-% jeweils bezogen auf das Acrylatpolymer). Weitere Füllstoffe wurden nicht zugesetzt.

Beispiel 2: Dreischichtiges Klebeband gemäß Beispiel 1, zusätzlich mit 5 Gew.-% Sidistar T120U in der Trägerschicht.

Beispiel 3: Dreischichtiges Klebeband gemäß Beispiel 1, zusätzlich mit 15 Gew.-% Sidistar T120U in der Trägerschicht.

Beispiel 4 (nicht erfindungsgemäß): Dreischichtiges Klebeband gemäß Beispiel 1, zusätzlich mit 5 Gew.-% SiliBeads 0-20 µm in der Trägerschicht.

Beispiel 5 (nicht erfindungsgemäß): Dreischichtiges Klebeband gemäß Beispiel 1, zusätzlich mit 15 Gew.-% SiliBeads 0-20 µm in der Trägerschicht.

Beispiel 6 (nicht erfindungsgemäß): Dreischichtiges Klebeband gemäß Beispiel 1, zusätzlich mit 5 Gew.-% Poraver 0,04-0,125 in der Trägerschicht.

Beispiel 7 (nicht erfindungsgemäß): Dreischichtiges Klebeband gemäß Beispiel 1, zusätzlich mit 15 Gew.-% Poraver 0,04-0,125 in der Trägerschicht.

Die Klebebänder wurden klebtechnischen Untersuchungen unterzogen, die Ergebnisse sind in Tabelle 2 enthalten.

**Tabelle 2: Klebtechnische Ergebnisse für Beispiele 1 bis 7**

| Beispiel | dynamischer Schertest (N/cm²) | dynamischer T-Block-Test (Primer, N/cm²) | Klebkraft Stahl 90° (Primer, N/cm) | Bruchkraft (N/cm²) | Bruchdehnung (%) |
|---|---|---|---|---|---|
| 1 | 62 | 58 | 29 | 45 | 865 |
| 2 | 73 | 67 | 38 | 51 | 917 |
| 3 | 90 | 75 | 45 | 67 | 1010 |
| 4 | 71 | 60 | 29 | 44 | 780 |
| 5 | 80 | 70 | 28 | 57 | 690 |
| 6 | 66 | 63 | 29 | 42 | 723 |
| 7 | 70 | 60 | 23 | 45 | 623 |

Beispiel 8: Dreischichtiges Klebeband mit HM1 als Trägerschicht und äußeren Haftklebschichten AL1, hergestellt nach V1 und K1. HM1 wurden zur thermischen Vernetzung anstelle von Polypox R16 und IPDA 0,2 Gew.-% Uvacure^{®} 1500 zugesetzt; geschäumt wurde mit 1 Gew.-% Mikroballons Expancel^{®} 920DU40. Die Trägerschicht enthielt darüber hinaus 5 Gew.-% Sidistar T120U.

Beispiel 9: Dreischichtiges Klebeband gemäß Beispiel 8 mit 25 Gew.-% Sidistar T120U in der Trägerschicht.

Beispiel 10: Dreischichtiges Klebeband gemäß Beispiel 8 mit 25 Gew.-% Sidistar T120U und 3 Gew.-% Expancel 920DU40 in der Trägerschicht.

Beispiel 11: Dreischichtiges Klebeband gemäß Beispiel 8 mit 25 Gew.-% Sidistar T120U, 0,3 Gew.-% Uvacure^{®} 1500 und 3 Gew.-% Expancel 920DU40 in der Trägerschicht.

Beispiel 12: Dreischichtiges Klebeband gemäß Beispiel 8 mit 15 Gew.-% Sidistar T120U, 0,25 Gew.-% Uvacure^{®} 1500 und 2 Gew.-% Expancel 920DU40 in der Trägerschicht.

Die Klebebänder wurden klebtechnischen Untersuchungen unterzogen, die Ergebnisse sind in Tabelle 3 enthalten.

**Tabelle 3: Klebtechnische Ergebnisse für Beispiele 8 bis 12**

| Beispiel | dynamischer Schertest (N/cm²) | dynamischer T-Block-Test (Primer, N/cm²) | Klebkraft Stahl 90° (Primer, N/cm) | Bruchkraft (N/cm²) | Bruchdehnung (%) | Dichte (kg/m³) |
|---|---|---|---|---|---|---|
| 8 | 78 | 62 | 42 | 0,70 | 1723 | 852 |
| 9 | 93 | 88 | 54 | 0,79 | 1919 | 946 |
| 10 | 96 | 87 | 68 | 0,91 | 1262 | 745 |
| 11 | 108 | 92 | 61 | 1,07 | 828 | 758 |
| 12 | 90 | 66 | 58 | 0,84 | 1458 | 719 |

Beispiel 13: Dreischichtiges Klebeband mit HM1 als Trägerschicht und äußeren Haftklebschichten AL2, hergestellt nach V1 + K1. HM1 wurde anstelle von Polypox R16 und IPDA mit 0,2 Gew.-% Uvacure^{®} 1500 thermisch vernetzt und mit 3 Gew.-% Mikroballons Expancel^{®} 920DU80 geschäumt. Zusätzlich enthielt HM1 5 Gew.-% Sidistar T120U.

Beispiel 14: Dreischichtiges Klebeband gemäß Beispiel 13 mit 0,3 Gew.-% Uvacure^{®} 1500.

Beispiel 15: Dreischichtiges Klebeband gemäß Beispiel 13 mit 25 Gew.-% Sidistar T120U.

Die Klebebänder wurden klebtechnischen Untersuchungen unterzogen, die Ergebnisse sind in Tabelle 4 enthalten.

**Tabelle 4: Klebtechnische Ergebnisse für Beispiele 13 bis 15**

| Beispiel | dynamischer Schertest (N/cm²) | dynamischer T-Block-Test (Primer, N/cm²) | Klebkraft Stahl 90° (Primer, N/cm) | Bruchkraft (N/cm²) | Bruchdehnung (%) | Dichte (kg/m³) |
|---|---|---|---|---|---|---|
| 13 | 64 | 63 | 40 | 0,50 | 981 | 581 |
| 14 | 66 | 69 | 31 | 0,52 | 643 | 582 |
| 15 | 79 | 79 | 65 | 0,63 | 1237 | 680 |

Beispiel 16 (nicht erfindungsgemäß): Einschichtiges Klebeband (ohne äußere Haftklebeschichten) bestehend aus HM2, ohne Zugabe von Mikroballons, mit 15 Gew.-% Sidistar T120U und ohne Füllstoffe, hergestellt nach V1.

Beispiel 17: Einschichtiges Klebeband gemäß Beispiel 30 mit zusätzlich 2 Gew.-% Mikroballons Expancel 920DU40.

Die Klebebänder wurden klebtechnischen Untersuchungen unterzogen, die Ergebnisse sind in Tabelle 5 enthalten.

**Tabelle 5: Klebtechnische Ergebnisse für Beispiele 16 bis 17**

| Beispiel | Klebkraft Stahl 90° (ohne Primer, N/cm) | Scherstandzeit (70°C) |
|---|---|---|
| 16 | 31 N/cm | 5870 min |
| 17 | 23 N/cm | 10.000 min |

Weitere im Rahmen der Untersuchungen zur vorliegenden Erfindung hergestellte Klebebänder wiesen die folgenden Charakteristika auf:
Beispiel 18: Dreischichtiges Klebeband gemäß Beispiel 3, Trägerschicht ist HM3.
Beispiel 19: Asymmetrisches Klebeband gemäß Beispiel 5, aber auf einer Seite kaschiert mit AL4 und auf der anderen mit AL2.
Beispiel 20: Einschichtiges Klebeband aus geschäumtem Polyacrylat gemäß V3, wobei zusammen mit den Hohlkugeln zusätzlich 25 Gew.-% Sidistar T120U zugegeben wurden.
Beispiel 21: Dreischichtiges Klebeband mit Beispiel 20 als Trägerschicht, beidseitig nach K1 kaschiert mit Klebmassen AL1.
Beispiel 22: Klebeband gemäß Beispiel 17 mit zusätzlich 25 Gew.-% des Harzes DT110. Das erhaltene einschichtige Produkt weist erhöhte Klebkraft und Tack gegenüber dem ansonsten gleichen Klebeband ohne Harz auf.
Beispiel 23: Verklebung des Klebebandes gemäß Beispiel 22 unter Einschluss des Verfahrens P1 auf einem ASTM-Stahl Prüfuntergrund. Beim Abziehen des Klebebands vom Untergrund wurde Kohäsionsbruch beobachtet.
Beispiel 24: Einschichtiges Klebeband aus HM6, hergestellt nach V1 mit Zugabe von 25 Gew.-% Sidistar T120U. Das Klebeband wurde unter Einschluss des Verfahrens P1 verklebt.
Beispiel 25 a): Klebeband gemäß Beispiel 24, einseitig auf der dem Substrat gegenüberliegenden Seite vor der Verklebung versehen mit AL3 nach K1.
Beispiel 26: Einschichtiges Klebeband aus HM5, hergestellt nach V1 mit Zugabe von 25 Gew.-% Sidistar T120U. Das einschichtige Produkt ist haftklebrig.
Beispiel 27: Klebeband gemäß Beispiel 12, enthält zusätzlich 15 Gew.-% der Glashohlkugeln E-Spheres SL 150. Das Produkt enthält somit einen geschäumten Träger, welcher einen erfindungsgemäßen Füllstoff und einen weiteren Füllstoff enthält. Bereits der Träger allein war haftklebrig und konnte alternativ als einschichtiges Klebeband genutzt werden.
Beispiel 28: Klebeband gemäß Beispiel 12, enthält zusätzlich 15 Gew.-% Silibeads 0-20µm. Das Produkt enthält somit einen geschäumten Träger, welcher eine Kombination zweier erfindungsgemäßer Füllstoffe enthält. Bereits der Träger allein war haftklebrig und konnte alternativ als einschichtiges Klebeband genutzt werden.
Beispiel 29: Klebeband gemäß Beispiel 27 ohne Mikroballons im Träger. Bereits der Träger allein war haftklebrig und konnte alternativ als einschichtiges Klebeband genutzt werden.
Beispiel 30: Einschichtiges Klebeband gemäß Beispiel 17, wobei jedoch die Klebkraftprüfung unter Verwendung eines Primers ausgeführt wurde, wie in der Prüfmethode "Klebkraft" beschrieben. Bei der Prüfung wurde Kohäsionsbruch beobachtet, mit einem Ergebnis von 65 N/cm.

## Patentansprüche

1. Haftklebmasse, enthaltend
mindestens ein Polymer,
zumindest teilweise expandierte Mikroballons und
5 bis 50 Gew.-%, bezogen auf das Gesamtgewicht der Haftklebmasse, mindestens eines in seine Primärpartikel vereinzelbaren Füllstoffs, wobei dieser Füllstoff Primärpartikel mit einem Aspektverhältnis der Längen von kürzester Achse Lₘᵢₙ zu längster Achse Lₘₐₓ von größer als 0,5 und mit einem mittleren Durchmesser d(0,5), bestimmt mittels Laserbeugung als Maximum der Verteilungskurve von anteiligem Volumen zu Partikelgröße an einer Suspension der Partikel in deionisiertem Wasser, von 50 nm bis 1000 nm enthält und diese Partikel nicht aus konzentrischen Schichten aufgebaut sind.

2. Haftklebmasse gemäß Anspruch 1, **dadurch gekennzeichnet, dass** die Partikel des Füllstoffs aus einer Siliziumdioxid-Modifikation bestehen.

3. Haftklebmasse gemäß einem der Ansprüche 1 und 2, **dadurch gekennzeichnet, dass** das Polymer ein Poly(meth)acrylat ist.

4. Haftklebmasse gemäß einem der vorstehenden Ansprüche, **dadurch gekennzeichnet, dass** die Haftklebmasse ein Schaum ist.

5. Klebeband, umfassend eine Haftklebmasse gemäß einem der Ansprüche 1 bis 4.

6. Klebeband gemäß Anspruch 5, **dadurch gekennzeichnet, dass** das Klebeband mindestens eine weitere Klebmasse umfasst.

7. Klebeband gemäß einem der Ansprüche 5 und 6, **dadurch gekennzeichnet, dass** das Klebeband mindestens eine Schicht bestehend aus einer Heißschmelzklebmasse umfasst.

8. Verfahren zur Herstellung einer Haftklebmasse gemäß einem der Ansprüche 1 bis 4, umfassend das lösemittelfreie Compoundieren der Haftklebmasse in einem kontinuierlichen Aggregat.

9. Verfahren gemäß Anspruch 8, **dadurch gekennzeichnet, dass** das kontinuierliche Aggregat ein Doppelschneckenextruder oder ein Planetwalzenextruder ist.

10. Verfahren zur Herstellung einer Haftklebmasse gemäß einem der Ansprüche 1 bis 4, umfassend mindestens einen Polymerisationsschritt zur Herstellung des mindestens einen Polymers, wobei der in seine Primärpartikel vereinzelbare Füllstoff vor Ende des letzten Polymerisationsschritts zur Herstellung des mindestens einen Polymers zugegeben wird.

11. Verfahren gemäß Anspruch 10, **dadurch gekennzeichnet, dass** mindestens ein Polymerisationsschritt zur Herstellung des mindestens einen Polymers mittels energiereicher Strahlung initiiert wird.

## Claims

1. A pressure-sensitive adhesive, containing at least one polymer, at least partially expanded microballoons, and 5 to 50% by weight, with respect to the total weight of the pressure-sensitive adhesive, of at least one filler which can be separated into its primary particles, wherein this filler contains primary particles with an aspect ratio of the lengths of the shortest axis, Lₘᵢₙ, to the longest axis, Lₘₐₓ, of more than 0.5 and with a mean diameter d(0.5), determined by means of laser diffraction as the maximum of the distribution curve of the proportional volume against particle size on a suspension of the particles in deionized water, of 50 nm to 1000 nm, and these particles are not constructed from concentric layers.

2. The pressure-sensitive adhesive as claimed in claim 1, **characterized in that** the particles of the filler consist of a modified silicon dioxide.

3. The pressure-sensitive adhesive as claimed in one of claims 1 and 2, **characterized in that** the polymer is a poly(meth)acrylate.

4. The pressure-sensitive adhesive as claimed in one of the preceding claims, **characterized in that** the pressure-sensitive adhesive is a foam.

5. An adhesive tape, comprising a pressure-sensitive adhesive as claimed in one of claims 1 to 4.

6. The adhesive tape as claimed in claim 5, **characterized in that** the adhesive tape comprises at least one further adhesive.

7. The adhesive tape as claimed in one of claims 5 and 6, **characterized in that** the adhesive tape comprises at least one layer consisting of a hotmelt adhesive.

8. A method for the production of a pressure-sensitive adhesive as claimed in one of claims 1 to 4, comprising the solvent-free compounding of the pressure-sensitive adhesive in a continuous unit.

9. The method as claimed in claim 8, **characterized in that** the continuous unit is a twin-screw extruder or a planetary gear extruder.

10. A method for the production of a pressure-sensitive adhesive as claimed in one of claims 1 to 4, comprising at least one polymerisation step for the production of the at least one polymer, wherein the filler which can be separated into its primary particles is added before the end of the last polymerisation step for the production of the at least one polymer.

11. The method as claimed in claim 10, **characterized in that** at least one polymerisation step for the production of the at least one polymer is initiated by means of high-energy radiation.

## Revendications

1. Masse d'adhésif sensible à la pression, contenant au moins un polymère, des microballons au moins partiellement expansés, et 5 à 50 % en poids, par rapport au poids total de la masse d'adhésif sensible à la pression, d'au moins une charge susceptible d'être séparée en ses particules primaires, ladite charge contenant des particules primaires dont le rapport d'aspect entre les longueurs de l'axe le plus court Lₘᵢₙ et de l'axe le plus long Lₘₐₓ est supérieur à 0,5 et dont le diamètre moyen d(0,5), déterminé par diffraction laser en tant que maximum de la courbe de distribution entre les fractions de volume et la taille de particules suite à la mise en suspension des particules dans de l'eau déionisée, est compris entre 50 nm et 1000 nm, et lesdites particules étant constituées de couches concentriques.

2. Masse d'adhésif sensible à la pression selon la revendication 1, **caractérisée en ce que** les particules de ladite charge sont constituées d'une modification de dioxyde de silicium.

3. Masse d'adhésif sensible à la pression selon l'une des revendications 1 et 2, **caractérisée en ce que** ledit polymère est un poly(méth)acrylate.

4. Masse d'adhésif sensible à la pression selon l'une des revendications précédentes, **caractérisée en ce que** la masse d'adhésif sensible à la pression est une mousse.

5. Bande adhésive, comprenant une masse d'adhésif sensible à la pression selon l'une des revendications 1 à 4.

6. Bande adhésive selon la revendication 5, **caractérisée en ce que** la bande adhésive comprend au moins une autre masse d'adhésif.

7. Bande adhésive selon l'une des revendication 5 et 6, **caractérisée en ce que** la bande adhésive comprend au moins une couche constituée d'une masse d'adhésif thermofusible.

8. Procédé de fabrication d'une masse d'adhésif sensible à la pression selon l'une des revendications 1 à 4, comprenant le compoundage, sans solvants, de la masse d'adhésif sensible à la pression dans un appareillage à fonctionnement continu.

9. Procédé selon la revendication 8, **caractérisé en ce que** l'appareillage à fonctionnement continu est une extrudeuse à double vis ou une extrudeuse à vis planétaires.

10. Procédé de fabrication d'une masse d'adhésif sensible à la pression selon l'une des revendications 1 à 4, comprenant au moins une étape de polymérisation visant à obtenir ledit au moins un polymère, ladite charge susceptible d'être séparée en ses particules primaires étant ajoutée avant que la dernière étape de polymérisation visant à obtenir l'au moins un polymère ne soit achevée.

11. Procédé selon la revendication 10, **caractérisé en ce qu'**au moins une étape de polymérisation visant à obtenir ledit au moins un polymère est initiée au moyen d'un rayonnement de haute énergie.
